# EUROPEAN PATENT SPECIFICATION

(11) **EP 1 425 763 B1**
(45) Date of publication and mention of the grant of the patent: **15.02.2017**
(21) Application number: 02757967.1
(22) Date of filing: 26.08.2002
(51) Int. Cl.: H01F 7/04, H01F 13/00, B23Q 3/15, B66C 1/04

(54) **SWITCHABLE MAGNETIC DEVICE**
UMSCHALTBARE MAGNETISCHE EINRICHTUNG
DISPOSITIF MAGNETIQUE COMMUTABLE

(30) Priority: 24.08.2001 AU PR725101; 14.09.2001 US 951905; 17.01.2002 AU PR997502; 23.01.2002 AU PS009102; 07.02.2002 AU PS033802; 14.03.2002 AU PS108302; 19.03.2002 AU PS116802
(43) Date of publication of application: 09.06.2004
(73) Proprietor: The Aussie Kids Toy Company Pty. Limited, Port Macquarie, NSW 2444 (AU)
(72) Inventor: KOCIJAN, Franz, Pappinbarra, New South Wales 2446 (AU)
(74) Representative: Ertl, Nicholas Justin
(86) International application number: PCT/AU2002/001156
(87) International publication number: WO 2003/019583

(56) References cited:
- EP-A- 0 559 483
- WO-A-01/43147
- DE-A1- 19 710 186
- GB-A- 1 210 744
- GB-A- 2 121 238
- GB-A- 2 130 797
- GB-A- 2 211 356
- US-A- 4 419 644
- US-A- 4 639 170
- US-A- 5 166 654
- US-A- 5 170 144
- US-A1- 2001 026 204
- COEY J M D: "Permanent magnet applications" JOURNAL OF MAGNETISM AND MAGNETIC MATERIALS, ELSEVIER SCIENCE PUBLISHERS, AMSTERDAM, NL, vol. 248, no. 3, 1 August 2002 (2002-08-01), pages 441-456, XP004381285 ISSN: 0304-8853
- DATABASE WPI Week 199339, Derwent Publications Ltd., London, GB; Class Q38, AN 1993-310458, XP002981128 & SU 1 763 341 A (MUDROV N V) 23 September 1992

## Description

### Field of the invention

The present invention relates to a switchable magnetic device. The present invention may be incorporated into various devices including latching device, clamping devices, coupling devices, etc.

### Background of the invention

Patent document WO 01/043147 and US patent 6,707,360 describe a switchable permanent magnetic device is described. This device includes a housing and first and second permanent magnets mounted in the housing. The first and second permanent magnets are mounted in the housing such that they are able to be relatively rotated. This is preferably achieved by having one of the magnets fixed into position and the second magnet being rotatable. In the device of WO 01/043147, the first and second magnets can be positioned such that a north and south pole of the first magnet are in substantial alignment with respect of north and south poles of the second magnet. When the magnets are in this orientation, the device presents a strong external magnetic field. The magnets can also be rotated relative to each other such that the north pole of the first magnet is substantially in alignment with the south pole of the second magnet and the south pole of the first magnet is substantially in alignment with the north pole of the second magnet. In this orientation, the device presents a relatively weak external magnetic field. The magnets are rotated by the actuation means.

### Summary of the invention

The invention is defined by the claims.

Unless expressly stated otherwise, wherein in the specification the phrase "switchable magnetic device" is used the phrase should be understood to refer to a device including a first permanent magnet and a second permanent magnet, the first and second permanent magnets being rotatable relative to each other between an "off state in which the magnets are aligned such that the device presents a relatively weak external magnetic field, and an "on" state in which the magnets are aligned such that the device presents a relatively strong external magnetic field.

The present invention provides a switchable magnetic device of the kind including a housing, a first permanent magnet, a second permanent magnet, the first and second permanent magnets being mounted within the housing such that the first and second magnets are rotatable relative to each other, between a "fully off position in which the north and south poles of the first magnet are in substantial alignment with the south and north poles respectively of the second magnet such that the device presents a relatively weak external magnetic field, and a "fully on" position in which the north and south poles of the first magnet are positioned substantially in alignment with the north and south poles respectively of the second magnet such that the device presents a relatively external magnetic field, characterised in that biasing means are operatively associated with first and second magnets to bias the relative rotation of said magnets away from the fully off toward the fully on position, the bias being such as to cause the first and second magnets to rotate to a relative orientation such that the device presents a relatively strong external magnetic field when said device is placed on or in close proximity to a ferromagnetic material.

Preferably when said device is on or in close proximity to a ferromagnetic material the force required to cause relative rotation of the first and second magnets towards the fully on position is within a first predetermined force range, and when said device is not in contact with or in close proximity to a ferromagnetic material the force required to cause relative rotation of the first and second magnets toward the fully on position is within a second predetermined force range, said second predetermined force range having a higher peak force than said first predetermined force range, and wherein said bias means applies a rotational force to bias the relative rotation of said magnets towards the fully on position with a force exceeding the peak force of the first predetermined force range, but less than the peak force of the second predetermined force range, thereby causing the magnets to automatically rotate toward the fully on position when the device is on or in close proximity to a ferromagnetic material. The bias means is preferably a spring.

The device of the present invention provides a switchable magnetic device that can automatically switch to an "on" position in which the device presents a relative strong external magnetic field when the device is positioned on or in close proximity to a ferromagnetic material.

In a second aspect, the present invention provides a switchable magnetic device of the kind including a housing, a first permanent magnet, a second permanent magnet, the first and second permanent magnets being mounted within the housing such that the first and second magnets are rotatable relative to each other, between a "fully off" position in which the north and south poles of the first magnet are in substantial alignment with the south and north poles respectively of the second magnet such that the device presents a relatively weak external magnetic field, and a "fully on" position in which the north and south poles of the first magnet are positioned substantially in alignment with the north and south poles respectively of the second magnet such that the device presents a relatively strong external magnetic field, characterised in that said device further includes rotation limiting means to limit the extent of the relative rotation of the magnets.

The rotation limiting means can permit relative rotation of the magnets between a deactivated state in which the north and south poles of the first magnet are most closely aligned with the south and north poles respectively of the second magnet such that the device presents a relatively weak external magnetic field, and an activated position in which the north and south poles of the first magnet are positioned approximately in alignment with the north and south poles respectively of the second magnet such that the device presents a relatively strong external magnetic field.

In the activated state, the angle of misalignment of the north and south poles of the first magnet and the north and south poles respectively of the second magnet is preferably less than 15 degrees. More preferably the misalignment is approximately 10 degrees. The activated position can be the fully on position.

In the deactivated state the angle of misalignment of the north and south poles of the first magnet and the south and north poles respectively of the second magnet is preferably less than 40 degrees. More preferably it is less than 30 degrees. In a particularly preferred embodiment the deactivated state has the magnets in the fully off position.

The rotation limiting means limits the relative rotation of the magnets to less than or equal to 180 degrees. Preferably the rotation limiting means prevents said magnets from reaching the "fully on" position.

The rotation limiting means may allow the relative rotation of the magnets to an extent greater than 180 degrees Preferably the rotation limiting means allows relative rotation of the magnets to an orientation past the "fully on" position.

Preferably, in use when the device is on or in close proximity to a ferromagnetic material the magnets are retained in the activated position by a retaining force.

It is also preferable that when the device is on or in close proximity to a ferromagnetic material a first force is required to retain the magnets in the activated position, and when said device is not in close proximity to a ferromagnetic material a second force, greater than the first force, is required to retain the magnets in the activated position, and wherein the retaining force applied to hold the magnets in the activated position is greater than the first force but less than the second force, thereby allowing the magnets to automatically rotate toward the deactivated position when the device is removed from a position in contact with or in close proximity to a ferromagnetic material.

The retaining force may be a friction force. The device may further include retention means configured to apply a retaining force to retain the magnets in the activated position when the device is in contact with or in close proximity to a ferromagnetic material. The retention means preferably includes a latch means which yields at a predetermined force less than the second force but greater than the first force.

In a third aspect, the present invention provides a switchable magnetic device of the kind including a housing, a first permanent magnet, a second permanent magnet, the first and second permanent magnets being mounted within the housing such that the first and second magnets are rotatable relative to each other, between a "fully off' position in which the north and south poles of the first magnet are in substantial alignment with the south and north poles respectively of the second magnet such that the device presents a relatively weak external magnetic field, and a "fully on" position in which the north and south poles of the first magnet are positioned substantially in alignment with the north and south poles respectively of the second magnet such that the device presents a relatively strong external magnetic field, characterised in that relative rotation of the first and second magnets is limited such that said magnets are prevented from reaching the fully on position but said first and second magnets can be rotated to a predetermined relative orientation such that the north and south poles of the first magnet are closely but not completely aligned with respective north and south poles of the second magnet such that said device still presents a relatively strong external magnetic field and said device automatically switches to a state where the external magnetic field is relatively weak when said device is removed from contact or removed from close proximity to an external ferromagnetic material.

The invention may provide a switchable magnetic device of the kind including a housing, a first permanent magnet, a second permanent magnet, the first and second permanent magnets being mounted within the housing such that the first and second magnets are rotatable relative to each other between a "fully off' position in which the north and south poles of the first magnet are in substantial alignment with the south and north poles respectively of the second magnet such that the device presents a relatively weak external magnetic field, and a "fully on" position in which the north and south poles of the first magnet, are positioned substantially in alignment with the north and south poles respectively of the second magnet such that the device presents a relatively strong external magnetic field, and actuation means configured to cause relative motion of the first and second magnets, characterised in that said actuation means includes a flexible portion that deforms if the actuation means is actuated in the absence of an external magnetic circuit to thereby limit relative rotation of said magnets, said flexible portion having sufficient yield strength to substantially avoid deformation during actuation of said actuation means in the presence of an external magnetic circuit.

Preferably, said flexible portion is a spring link.

Preferably, said flexible portion can be deformed to a maximum extent, after which continued actuation of the actuation means acts to cause relative rotation of the magnets.

In one embodiment of the present invention, if an external magnetic circuit is established and the device switched to the "on" position, the device may remain in the "on" position if the external magnetic circuit is forcibly removed. Thus, the device can act as a "memory" adviser in that its status can tell whether successful contact with an external magnetic circuit was achieved.

The housing may include a pair of passive ferromagnetic elements which are magnetically separated, for example, by an air gap or by magnetically high reluctance material(s). The housing most suitably defines a chamber in which the first and second magnets are positioned. The chamber may have open ends or, more preferably, is a closed chamber. Chamber closing members are suitably used to close the chamber.

In another embodiment, the housing is made as a unitary construction from a single piece of material. In this embodiment, it is preferred that there be two portions of the housing having reduced cross sectional area such that the housing acts as two passive poles. Alternatively, portions of the housing may be treated such that the portions become non-magnetic to thereby result in the housing acting as two passive poles.

The housing is preferably made from a material having a low magnetic reluctance. Soft steel, iron or permalloys are examples of suitable materials for the housing.

The housing most preferably includes a pair of passive poles. The strength of the external magnetic field can be maximised by shaping the pair of passive poles such that they reflect the magnetic field strength around the perimeter of the first and second permanent magnets.

The first and second magnets are preferably substantially disc-shaped. Most preferably, the first and second magnets are essentially cylindrical in shape and the height of the cylinder is less than the diameter of the cylinder. It will be appreciated that the first and second magnets need not be exactly cylindrical and that slight variations from a circular cross-section also fall within the scope of the present invention. The height of the magnets may vary over a wide range, and the ratio of diameter to height may also vary over a wide range.

The first and second magnets are preferably also diametrically magnetised. By that, it is meant that the north pole region is separated by a diameter of the cylindrical surface of the magnet from the south pole region. The north pole region and south pole region both exist on the upper and lower substantially circular faces of the magnet and extend through the length or height of the magnet.

As mentioned earlier, it is preferred that one magnet is fixed in the housing and one magnet can rotate in the housing. It is especially preferred that the rotatable magnet can rotate about the centre point of its essentially circular faces. In this fashion, the requirement for large clearances between the inner walls of the housing and the rotatable magnet are avoided. In this embodiment, the shape of the body of rotation of the rotatable magnet is the same shape as the magnet itself (ie substantially circular in top or plan view) and thus the magnet can rotate and yet retain its positioning relative to the walls of the housing.

The actuation means for causing relative rotation of the magnets preferably comprises a handle or knob being in connection with one of the magnets. The handle or knob may be connected to the one magnet by one or more intermediate members.

The handle or knob may be rotated manually, electrically, pneumatically, hydraulically, by the action of expansion of a bimetallic strip, or indeed by any other suitable method.

As mentioned above, the housing preferably includes two passive poles, and it is also preferred that one magnet is fixed in the housing. In this particularly preferred embodiment, the one magnet is fixed in place such that the pole pieces are permanently energised. It will also be appreciated that, in some embodiments of the present invention, both magnets may rotate.

The permanent magnets in the present invention may be of any suitable type. The most preferred at present are rare earth magnets because they can have a strong magnetic field. Such magnets also have a high coercivity, which means that they resist becoming demagnetised. It is envisaged that permanent magnetic technology will continue to develop and it is likely that more powerful magnets will become available in the future that will be suitable for use in the present invention.

The first and second magnets may be essentially identical to each other.

Alternatively, the first and second magnets may have different magnetic properties. The magnets may have the same or different physical dimensions to each other. Varying the magnetic properties or the physical dimensions of the first and second magnets can be used in some embodiments of the invention to vary magnetic switching properties.

In all aspects of the present invention, the device may further include a child-proof lock or child-proof catch type arrangement in the actuation means such that some extra manipulation by a user is required before the magnets can be rotated. For example, the actuation means may comprise a knob that must be pushed down before rotational force applied to the knob can be transferred to the magnet(s)). Other arrangements which will be readily apparent to the person of skill in the art will also be readily apparent.

According to another aspect of the present invention there is provided a switchable magnetic device configured to operably engage one or more functional modules adapted to provide or limit functionality of the switchable magnetic device.

The one or more functional modules can include one or more of the following types of module:
a rotation limiting module which limits the relative rotation of the magnets of the switchable magnetic device to within a predetermined angular range.
a biasing module configured to bias the relative rotation of the magnets of the switchable magnetic device.
a locking module configured to releasably lock the relative orientation of the magnets of the switchable magnetic device.

The locking module is preferably configured to releasably lock the magnets of the switchable magnetic device in one or more predetermined relative orientations.

Preferably the switchable magnetic device further includes actuation means configured to cause relative rotation of the magnets, wherein the actuation means are additionally configured to be engaged by said at least one functional module to control the functionality of the switchable magnetic device.

In preferred embodiment the switchable magnetic device further includes indication means to indicate the relative orientation of the magnets. In use, if the switchable magnetic device is forcibly removed form an external magnetic circuit, the indication means can indicate the relative orientation of the magnets prior to removal. The indication means may comprise the actuation means.

The present invention can be incorporated into a device for collecting ferromagnetic items, said device including a ferromagnetic collection portion configured to collect and retain ferromagnetic items by magnetic attraction therewith, and a surface engaging portion which is configured in use to engage a ferromagnetic support surface against which the device is held, wherein when the switchable magnetic device switchable is in the "off" position in,
the ferromagnetic collection portion is substantially demagnetised, and in an "on" position in which the external magnetic field of the switchable magnetic device magnetises the collection portion to collect and retain ferromagnetic articles in contact with or in close proximity to the collection portion, and holds the device against the ferromagnetic support surface by magnetic attraction.

Preferably when the switchable magnetic device is on the "off" position the magnetic attraction between the ferromagnetic collection portion and the ferromagnetic articles and the switchable magnetic device and the support surface are negligible.

The device can further include actuation means configured to switch the switchable magnetic device between the on and off positions.

In a preferred embodiment the collecting device further includes at least one ferromagnetic shunt located between the switchable magnetic device and the ferromagnetic collection portion which is magnetised preferentially to the ferromagnetic collection portion when the switchable magnetic device is in the off position, thereby effectively preventing magnetisation of the ferromagnetic collection portion when the switchable magnetic device is in the off position. The ferromagnetic shunt is preferably not magnetically saturated when the switchable magnetic device is in the off position, but is magnetically saturated when the switchable magnetic device is in the on first position. The device can further include a high reluctance region between the switchable magnetic device and the surface engagement portion, wherein the high reluctance region has sufficient reluctance that the magnetic flux at the surface engagement portion is substantially independent of the magnetic properties of the support surface.

The present invention can also be used in a clamping means adapted to clamp at least one article, said clamping means including: a first clamping member ; a second clamping member slideable towards and away from the first clamping member, and spaced apart from the first member to define a gap into which an article to be clamped can be inserted ; and a switchable magnetic device mounted to or in close proximity to one of the first or second clamping member, said switchable magnetic device including actuation means for switching the switchable magnetic device off or on, whereby when the switchable magnetic device is on the first and second clamping
members move towards each other thereby clamping an article inserted in the gap between the clamping members.

The holder preferably includes one or more additional clamping members slideable relative to the first and second clamping members, and arranged such that a gap into which an article to be clamped can be inserted is defined between neighbouring pairs of clamping members, whereby when the switchable magnetic device is "on" neighbouring pairs of clamping members move towards each other thereby clamping an article inserted in the gap between the neighbouring pairs of clamping members. The holder can also include one or more additional switchable magnetic devices mounted to one or more of the additional clamping members.

Preferably the holder further includes means for operating the actuation means of one of said switchable magnetic devices in concert with at least one other of the one or more additional switchable magnetic devices.

The switchable magnetic device of the present invention may also form part of a gripping device configured to grip a surface, said gripping device including at least one gripping means of the type having an evacuatable void adapted to sealably engage a surface, wherein said gripping means grips the surface by forming a suction force between the surface and the gripping means by partially evacuating the void, wherein said gripping device further includes at least one switchable magnetic device configured to produce an additional magnetic engagement with a surface when the surface is ferromagnetic.

Preferably when the gripping means is sealably engaged with a surface said at least one switchable magnetic device is in contact with or in close proximity to the surface.

In use the magnetic engagement of the at least one switchable magnetic device acts to at least partially re-establish the sealing engagement of the gripping means with the surface, if the sealing engagement is partially or wholly broken.

The gripping device can include actuation means to switch the switchable magnetic device between the on and or off position to enable attachment and or detachment of the gripping device to or from the surface respectively.

The gripping device can also include one or more magnetic pole extension means which provide a relatively high permeability magnetic circuit to substantially conduct the external magnetic field of the switchable magnetic device to a ferromagnetic surface to increase magnetic attraction therewith. The gripping device can also include a plurality of gripping means or switchable magnetic devices.

The switchable magnetic device of the present invention may be used also in apparatus a coupling comprising a first magnetic device and a second magnetic device, the first magnetic device being a switchable magnetic device in accordance with the invention, said first magnetic device and said second magnetic device being arranged relative to each other such that said second magnetic device attracts the first magnetic device when the first magnetic device is off, and said second magnetic device repels said first magnetic device when said first magnetic device is on.

The second magnetic device may comprises a magnet. Preferably the second magnetic device comprises a second switchable magnetic device and the first and second switchable magnetic devices repel each other when said first and second switchable magnetic devices are turned on.

Preferably the first magnetic device is movable relatively towards and away from the second magnetic device.

The present invention may be used also in a coupling including the switchable magnetic device, and at least one second magnetic means, said switchable magnetic device and said second magnetic means being arranged relative to each other such that when the switchable magnetic device is on and the second magnetic means is in contact with or in close proximity to the switchable magnetic device, the second magnetic means is relatively strongly attracted to the switchable magnetic device to thereby couple said the second magnetic means to the switchable magnetic device, and when said switchable magnetic device is off the second magnetic means is relatively weakly attracted to the switchable magnetic device such that the second magnetic means and switchable magnetic device can be decoupled.

Preferably the coupling includes at least one additional magnetic means arranged relative to the second magnetic means such that when the switchable magnetic device is on and the second magnetic means is in contact with or in close proximity to the switchable magnetic device, and the and additional magnetic means are in contact with or in close proximity to the second magnetic means, the additional magnetic means are coupled to the second magnetic means, and when said switchable magnetic device is off the second and additional magnetic means is relatively weakly attracted to the switchable magnetic device such that the second magnetic means and additional magnetic means can be decoupled.

The switchable device can be movable relatively towards and away from the second magnetic means. The additional magnetic means are preferably movable relatively towards and away from the second magnetic means and the switchable device. The at least one second magnetic means and or the at least one additional magnetic means can be ferromagnetic members.

The coupling can also include actuation means configured to turn the switchable magnetic device off to allow decoupling of the coupling means. Preferably the actuation means is additionally configured to turn the switchable magnetic device on to cause coupling of the coupling means.

The coupling may further include a plurality of spaced second magnetic means, and wherein the switchable magnetic device is movable such that the switchable magnetic device can be coupled to a chosen one of the plurality of spaced second magnetic means.

The present invention can also be used in a a latching arrangement including, a latching member, movable between an extended position in which it can be received into a latching recess to cause latching of the latching means, and a retracted position, a first magnetic means and a switchable magnetic device, movable relative to each other and mounted such that one of said, first magnetic means or switchable magnetic device is coupled to said latching member, such that actuation of the switchable magnetic device causes relative movement of the latching member.

The first magnetic means is preferably a magnet.

The switchable magnetic device or first magnetic means can be coupled to the latching member.

Preferably the switchable magnetic device and first magnetic means are arranged relative to each other such that switchable magnetic device attracts the first magnetic means when the switchable magnetic device is on. Alternatively the switchable magnetic device and first magnetic means are arranged relative to each other such that switchable magnetic device repels the first magnetic means when the switchable magnetic device is on.

The first magnetic means can also be formed from a ferromagnetic material, and the switchable magnetic device and first magnetic means are arranged relative to each other such that switchable magnetic device attracts the first magnetic means when the switchable magnetic device is on.

Either the first magnetic means or the switchable magnetic device can be mounted to the latching member.

The latching arrangement preferably further includes bias means to bias the latching pin into either the extended or retracted positions.

In one embodiment the latching member and a first magnetic means are mounted to first member, and the switchable magnetic device is mounted to a second member which is movable relative to the first member, wherein the latching means is configured to latch the first member to the second member.

In an alternative embodiment the latching pin and first magnetic means, and the switchable magnetic device are mounted to first member and the latching member is adapted to be received into a receiving aperture of a second member which is movable relative to the first member, wherein the latching means is configured to latch the first member to the second member. The latching member may comprise the first magnetic member.

The switchable magnetic device can further include a releasable holding means for releasably holding the magnets in a first relative orientation, said releasable holding means being releasable to allow the magnets to move to a second relative orientation. Preferably the switchable magnetic device includes actuation means for actuating the releasable holding means to release a said magnets. The actuation means preferably comprises a push button arrangement. The releasable holding means preferably releasably holds the biasing means.

The present invention can also be used in an electrical coupling configured to make an electrical connection with an external conductor, said coupling including at least one contact portion configured to make the electrical connection, wherein the switchable magnetic device is configured to retain the contact portion in conductive contact with the external conductor when the switchable magnetic device is in the on position.

Preferably the contact portion is mounted to the housing of the switchable magnetic device. The contact portion can be integrally formed with the housing of the switchable magnetic device. The electrical coupling can include two or more contact portions. Preferably the coupling further includes an electrically conductive circuit between said two or more contact portions. The coupling can also include cable receiving means adapted to receive and make electrical contact with an electrically conductive cable.

The electrical coupling preferably also includes actuation means adapted to relatively rotate the magnets of the switchable magnetic device between the on and off states to selectively allow coupling and decoupling of the electrical coupling means.

In a preferred embodiment the coupling further includes electrical switching means configured to selectively prevent or allow electrical current to pass through the coupling.

The actuation means can be associated with the electrical switching means such that an electrical current is prevented from passing through the coupling when the switchable magnetic device is in the off position. The electrical coupling can also include electrical insulation means.

The coupling can advantageously be configured to be an earth coupling for welding.

The present invention can also be used as a particle deflection means adapted to deflect charged particles moving past the deflection means, wherein the a switchable magnetic device is configured to generate an external magnetic field to deflect said particles.

The present invention can also find use in a suspension device having a first member suspended relative to a second member of the type including a first magnetic means associated with the first member and second magnetic means associated with the second member, characterised in that either said first or second magnetic means includes the switchable magnetic device.

The first and second magnetic means can be arranged to repel each other when said switchable magnetic device presents a relatively strong external magnetic field. Alternatively the first and second magnetic means can be arranged to attract each other when said switchable magnetic device presents a relatively strong external magnetic field. In this case the first and second magnetic means can also be arranged to attract each other when said switchable magnetic device presents a relatively weak external magnetic field.

The magnetic suspension device can further include damping means including an electrically conductive portion coupled to the first or second member such that relative movement of the first and second members causes the conductive portion to move in the magnetic field generated by the first or second magnetic means.

The first and second members are preferably slideable relative to each other. The first magnetic means and or second magnetic means can include a switchable magnetic device.

In use the external magnetic field of the switchable magnetic device can preferably be varied to vary the separation the first and second members when suspended.

The suspension device can preferably comprise a damper or a shock absorber.

### Brief description of drawings

Notwithstanding other forms which may fall within the scope of the present invention, preferred forms of the invention will now be described by way of example only with reference to the accompanying drawings, in which:
Figure 1A shows a plot of relative force against angular displacement showing the internal forces acting on the device as a function of angular displacement of the magnets relative to each other in the absence of an external magnetic circuit;
Figure 1 B is a similar plot to Figure 1A but shown in the presence of an external magnetic circuit;
Figure 2 shows a plot similar to that of figure 3 for a prototype switchable magnetic device showing relative force against angular displacement for a range of separations from an external magnetic circuit.
Figure 3 shows a plot of Figures 1 and 2 superimposed upon each other with an explanation as to the functioning of the first aspect of the present invention;
Figure 4A shows the forces required for an explanation as to the functioning of the second and third aspects of the present invention;
Figure 5A is reproduction of Figure 2 of WO 01/043147 showing one basic construction of the switchable magnetic device;
Figure 5B shows an end view of a device in accordance with an aspect of the present invention, showing an alternative shape for the pole pieces.
Figure 6 is a top view, partly in cross-section of a switchable magnetic device in accordance with an embodiment of the present invention;
Figure 7 shows a top view of a switchable magnetic device for use with the second and third aspects of the present invention;
Figure 8 shows a top view, in cross-section, of an embodiment of the invention using a torque sensitive lever as the actuation means; and
Figure 9 illustrates the forces involved in a fail-safe arrangement embodying the present invention;
Figure 10 shows the relationship between the angle of rotation and the external magnetic field in a device in accordance with an embodiment of the present invention;
Figure 11A shows a collection tray employing a switchable magnetic device according to an embodiment of the present invention;
Figure 11 B shows a cutaway view of a base portion of the collection tray of Figure 11A;
Figures 12A and 12B show schematic representations of a latching mechanism using a switchable magnetic device to actuate movement of a locking pin;
Figures 13A and 13B show a second variation of a latch mechanism employing a switchable magnetic device;
Figures 14A and 14B show a further embodiment of a latching mechanism which includes a switchable magnetic device according to an embodiment of the present invention;
Figures 15A and 15B show a cutlery block incorporating a switchable magnetic device;
Figure 16 shows an exemplary embodiment of an orientation control system for a satellite which includes a switchable magnetic device;
Figures 17A and 17B show embodiments of a hybrid vacuum/magnetic holder including a switchable magnetic device;
Figure 18 shows a switchable magnetic device having a modular construction;
Figures 19 and 20 show schematic diagrams demonstrating the principle of operation of a further coupling in accordance with a further aspect of the present invention;
Figure 21 shows a schematic cutaway view of a tunable suspension assembly using a switchable magnetic device;
Figure 22 shows a first embodiment of an adjustable braking systems using a switchable magnetic device; and
Figure 23 shows a second embodiment of an adjustable braking system using a switchable magnetic device.

### Detailed description of the drawings

It will be appreciated that the attached figures show preferred embodiments of the present invention. These figures have been provided for the purpose of illustrating the preferred embodiments of the present invention, and the present invention should not be considered to be limited to the specific embodiments as shown.

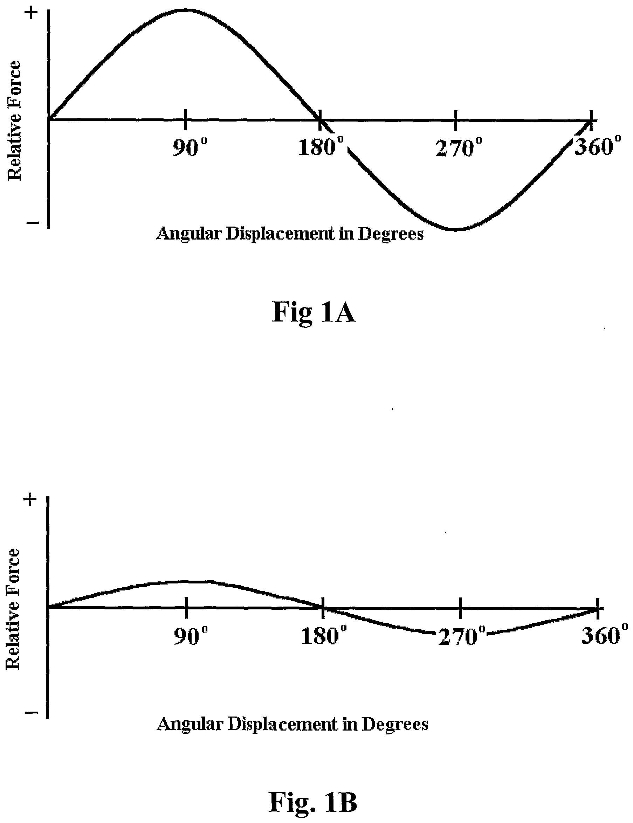

The various aspects of the present invention have been developed following further studies conducted by the inventor on the switchable magnetic device described in WO 01/043147. These studies have shown that the force required to turn the switchable magnetic device from the "off" to the "on" positions varies with the permeability of the external magnetic circuit. In particular, it has been found that the force required to switch the device into the "on" position from the "off" position, when there is no external magnetic circuit, is much greater than the force required to switch the device into the on position when an external magnetic circuit is present. A high permeability external magnetic circuit may be present, for example, when the device is placed in contact with or close proximity to an external ferromagnetic material. Figure 1A shows a graph of the relative force required to turn the actuation means of the switchable magnetic device described in WO 01/043147 with angular displacement. As can be seen from Figure 1A, the force required to switch the device into the "on" position (which is represented at an angular displacement of 180° in the graph of Figure 1A) is high if the external magnetic permeability is low. This is due to the high intrinsic magnetic field strength of the device when no high permeability external magnetic circuit is present.

Thus, work has to be performed to overcome the resistance produced by this intrinsic magnetic field. Rotation of the magnets toward the on position, i.e. 180° on Figure 1A, converts mechanical energy to magnetic potential energy which is stored in a high flux density repulsion field between the poles.

Figure 1B shows the same graph as Figure 1A, but with the switchable magnetic device being in the presence of an external magnetic path of high permeability. This may be achieved, for example, by placing the device in contact with, or in close proximity to, an external ferromagnetic material, such as occurs when the magnet is attached to an external iron load. As can be seen from Figure 1B, although the general shape of the graph is similar to that of Figure 1A, the relative force required to move the magnets between the off position and the on position is much lower than when there is no high permeability external magnetic circuit. The force required to move the magnets between the off and on positions in Figure 1B is lower than that in Figure 1A because the high permeability of the external magnetic circuit results in the magnetic flux finding an easier, external path, which diverts some of the magnetic flux from between the repelling poles.

In both Figure 1A and Figure 1B, an angular displacement force tries to return the magnets towards 0° or 360° orientation (ie the fully off position) except at 180° (ie the fully on position) at which clockwise and counter clockwise forces hold a balance, albeit an unstable or quasi-stable equilibrium.

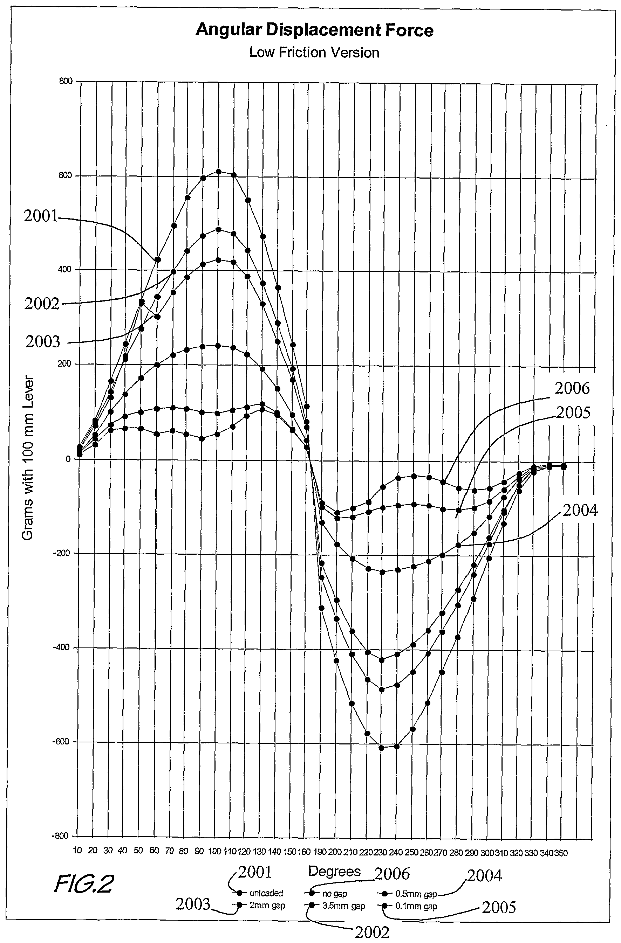

Figure 2 shows a series of plots of the relative force required to turn the actuation means of a prototype switchable magnetic device plotted against angular displacement. Each separate plot is a representative of the turning force when the switchable magnetic device is at a different separation distance from a ferromagnetic substrate. Plot 2001 shows the angle of the force vs angular displacement when the switchable magnetic device is unloaded, that is it is not in close proximity to a ferromagnetic surface. Plot 2002 shows the force vs angular displacement when the switchable magnetic device is 3.5 mm from the external magnetic article. Plots 2003, 2004 and 2005 show the force vs angular displacement when the switchable magnetic device is 2 mm, 0.5 mm and 0.1 mm respectively away from the magnetic circuit. Plot 2006 shows the force vs angular displacement when the switchable magnetic device is in contact with a ferromagnetic material. As can be seen from these plots as the switchable magnetic device is brought closer to an external ferromagnetic article the force required to rotate the magnets of the switchable magnetic device reduces significantly. When the switchable magnetic device is in contact with an external ferromagnetic circuit the peak force required to rotate the magnets between the off position (0 degrees) and on position (180 degrees) is less than 20% of the peak force required when the switchable magnetic device is unloaded.

Since the force acting on the magnets is always (except when the magnets are in the 180 degree equilibrium state) attempting to return the magnets to the off position (0 or 360 degrees) any work done to rotate the magnets into the on position is returned when the magnets are returned to the off position.

In the first aspect of the present invention the magnetic device includes a biasing means operatively associated with the magnets to bias the magnets away from the fully off position. As described above, when the switchable magnetic device has no external magnetic circuit, for example, where the device is not in contact with, or in close proximity to, an external ferromagnetic material, the force required to shift the device from the off position to the on position is relatively high. The biasing means is arranged so that it applies a rotational force to the magnets which is lower than the peak force required to move the actuation means to the on position in the absence of the external magnetic circuit but which is sufficient to move the actuation means to the on position in the presence of an external magnetic circuit. As a result, when the device in accordance with the first aspect of the present invention is placed in close proximity to, or in contact with, an external ferromagnetic material, the device automatically switches to the on position. Thus, the device of the first aspect of the present invention may be said to have an "automatic turn-on" feature.

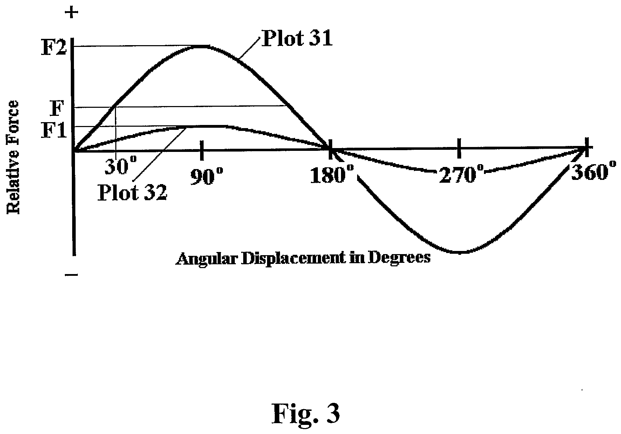

In the apparatus of the first aspect of the present invention, the biasing means acts to hold the actuation means away from the fully off position. For example, the biasing means may apply a force F as shown in Figure 3, which biases the actuation means away from the 0° or fully off position, when there is no external magnetic circuit present. In the example of in Figure 3, the biasing force F applied by the biasing means holds the actuation means at approximately 30° from the fully off position when there is no external magnetic circuit. When an external magnet circuit is closed, force F is greater than the force F1 required to move the magnets and hence the device automatically moves to the on position. Put in slightly different terms, the biasing means applies a rotational force F to the magnets. In the absence of an external magnetic circuit (plot 31), a maximum force F2 is required to move the device to the "on" position. As F is less than F2, the device does not move to the "on" position in the absence of an external magnet circuit. However, once an external magnetic circuit is in place (plot 32), the maximum force that needs to be applied to move to the "on" position reduces to F1. As the force F provided by the biasing means is greater than F1, the device automatically moves to the "on" position when an external magnetic circuit is completed.

With reference again to figure 2, a biasing means which applies approximately 2 Newtons of force would not rotate the magnets into the on position when the switchable magnetic device is unloaded but would rotate the magnets to the on position once the switchable magnetic device was placed within 0.1 mm, or in contact with an external ferromagnetic article. In this embodiment the 2 Newtons of force of the biasing means would cause the magnets to rest at a relative orientation of approximately 35° when the switchable magnetic device is unloaded.

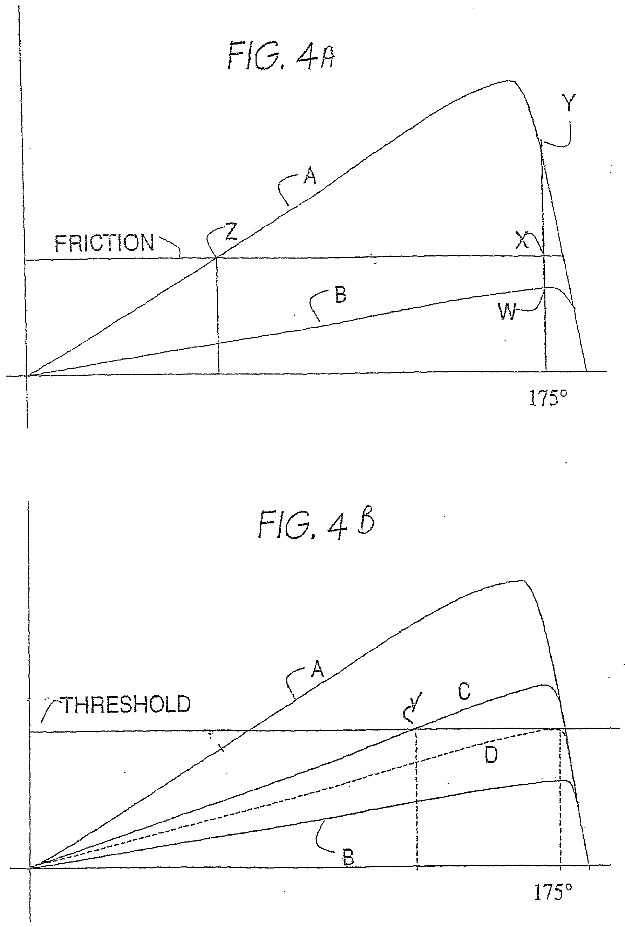

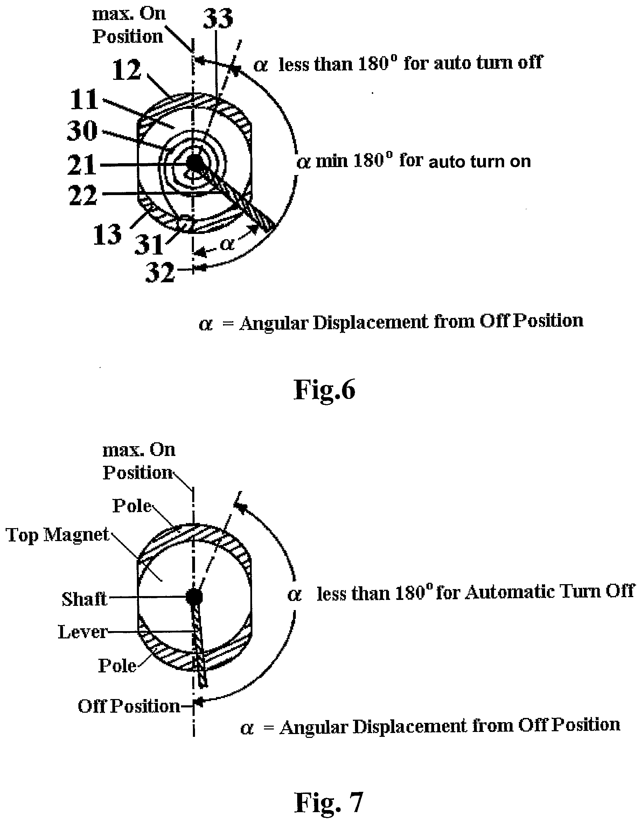

The embodiments in accordance with the second and third aspects of the present invention, may be described as including an "automatic off" feature in which the device automatically turns off if an external magnetic circuit is removed, for example, by forcibly removing the device from an external ferromagnetic material. In general terms the "automatic-off' feature is achieved by preventing the magnets from rotating into "fully on" position. This action may be explained with reference to Figure 4, which is a plot of angular displacement against the relative force, together with Figures 6 & 7. Plot A shows the force for the case where there is no external magnetic circuit and Plot B shows the force where there is an external magnetic circuit.

For the device to operate in the automatic-off mode, it may utilise the internal friction of the device, or a purpose built overridable retaining device may be used. The reset feature is triggered when the external magnetic path is interrupted.

Figure 4 illustrates the applicable forces in an embodiment of the automatic off configuration relying on the internal friction of the device. In this embodiment it is assumed that the device is switched on to, say, 175°, (Figure 7), ie, it is not in the 180° quasi-equilibrium position, and that the device is in contact with, or close proximity to an external magnetic circuit, such as a ferromagnetic material. Plot B represents the repulsive rotational force caused by magnetic repulsion between the magnets in this condition. In this configuration there is a reverse force, W (Figure 4 A), acting to rotate the magnets to the "off" orientation. The internal friction at 175° is shown at X. This frictional force resists the repulsive magnetic force W, and because the frictional force is greater than W, the switch remains in the 175° position as long as the high permeability external magnetic path is in place. If the external high permeability path is broken, the repulsive force between the magnets becomes that shown by Plot A, and the repulsive force becomes Y, which is greater than X. As a result, the movable magnet is driven towards the off position until the repulsive magnetic force of Plot A and the frictional force are in equilibrium at Z.

While the friction line is shown in Figure 4 as a straight line, the friction force may vary with rotation due to, eg, the effect of the change in the magnetic interaction between the magnets with position. Other factors besides friction (such as inertia of the magnet(s)) may also assist in retaining the device in the on position when in the presence of an external magnetic circuit.

Where a larger or more precise control of the automatic-off feature is required, a trippable latching mechanism which will yield under the Plot A magnetic repulsion, may be used. One embodiment of such a latch is similar to a triangular sectioned spring loaded door latch with a perpendicular "leading" edge in the turn on direction, and a sloping trailing edge. This spring-loaded latch can engage with a suitable recess at the desired angle of rotation (eg, 175°) on the other part of the relatively moving pair of magnets or their respective carriers. The spring tension can be adjusted to control the automatic turn off force while providing a more predictable latching force.

In another embodiment of the invention, the switchable magnetic device incorporates the automatic on feature and an automatic-off feature. Preferably the automatic-on feature is similar to that of the first aspect of the present invention and the automatic off feature is similar to that of either the second or third aspects of the present invention.

In embodiments of the first aspect of the present invention, the biasing means operatively associated with the actuation means preferably includes one or more springs. Alternatively, the biasing means may include air pressure means, pneumatic means, bimetallic spring or indeed any other suitable means for applying a biasing force.

It is preferred that the biasing means applies a biasing force such that the first and second magnets are offset by about 10° to 60°, more preferably 20° to 40°, most preferably about 30° from the fully off position when no external magnetic circuit is present.

In embodiments of the second or third aspects of the present invention, the rotation limiting means may comprise a stop means preventing rotation of the actuation means to the fully on position. Alternatively, the rotation limiting means may comprise stop means inter-engaging with one or both of the first and second magnets for preventing rotation of the first and/or second magnets into the fully on position. In this embodiment, the stop means may comprise a retractable engaging member that moves into a recess formed in a surface of one of the magnets when the recess moves into alignment with the retractable member as the magnet is rotated towards the on position. When the magnet rotates back towards the off position, an inclined or tapering surface may be provided in order to enable the retractable member to be disengaged from the recess in the magnet.

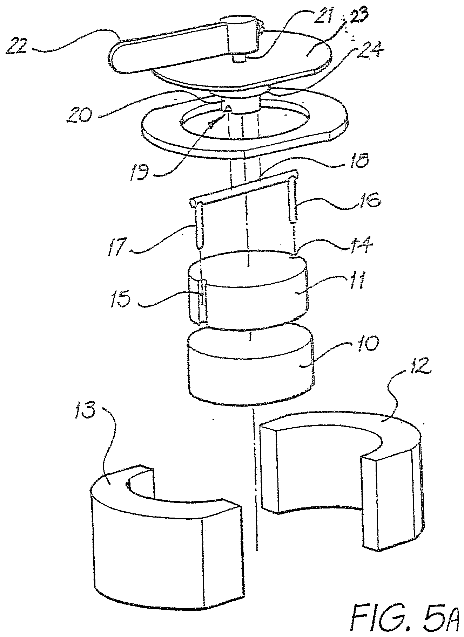

Turning to Figure 5A, the basic device described in our international patent application no PCT/AU00/01505 (WO 01/043147) and US Patent 6,707,360 includes a first magnet 10 and a second magnet 11. Both magnets 10, 11 are generally cylindrically or disc shaped magnets and are diametrically polarised similar to magnet 1 as shown in Figure 1 of WO 01/043147. Magnets 10, 11 are housed in a housing that is made from pole pieces 12,13. Pole pieces 12, 13 are preferably made from a material that is ferromagnetic with low magnetic reluctance. The pole pieces 12, 13 are arranged such that they fixedly hold lower magnets 10 in a fixed position. The upper magnet 11, however, is able to be rotated within the housing formed by pole pieces 12, 13.

In order to facilitate rotation of upper magnet 11, the magnet 11 is formed with notches or grooves 14, 15 along its vertical side walls. These notches or grooves 14, 15 receive the downwardly depending arms 16, 17 of bar 18. Bar 18 is received inside a groove 19 formed on boss 20. Boss 20 is connected to a short bar 21 that, in turn, is fixedly connected to a handle or lever 22. By this means, rotation of handle or lever 22 causes rotation of second magnet 11. It will be appreciated that second magnet 11 rotates essentially about its centre point.

The device further includes a top cover 23 that is fixedly secured to the housing formed by pole pieces 12 and 13. Cover 23 seals the top of the housing formed by pole pieces 12, 13. It will be noted that boss 20 extends through an opening in top cover 23 and that sealing member 24 assists in forming a water tight and dust proof seal around that opening.

In one embodiment of the device shown in Figure 5A, the lower surface of lower magnet 10 formed part of the lower surface of the device. In this embodiment, the lowest surface of the lower magnet 10 is positioned such that it lies essentially adjacent to the lower surfaces of respective pole pieces 12, 13. In another embodiment, the lower surface of the device is provided by a lower cover (not shown). In either embodiment, it is preferred that the device is substantially sealed, such that it is substantially waterproof and dustproof. This enables the device to be used in harsh environments, such as dusty environments, wet environments, or even fully submerged.

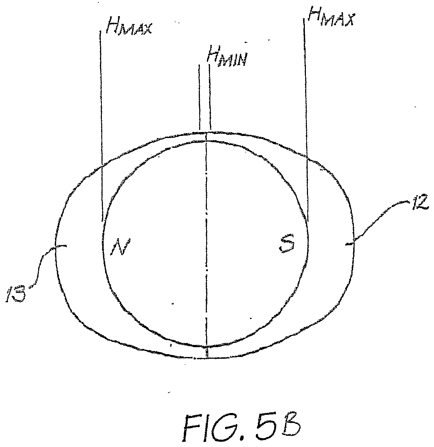

Turning to Figure 6, which shows a switchable magnetic device in accordance with the present invention, the basic device of Figure 6 is generally similar to that shown in
Figure 5 and like features have been denoted by like reference numerals. The device shown in Figure 6 includes embodiments of the first aspect of the present invention and embodiments of the second aspect of the present invention. It will be appreciated that other embodiments of the invention may provide the auto-on feature of the first aspect of the present invention or the auto-off feature of the second or third aspects of the present invention.

In addition to the features common to the embodiment of figure 5A, the device of Figure 6 also includes a biasing spring 30 in the form of a coil spring connected at one end 31 to pole 13 and at its inner end to the shaft 21. Coil spring 30 biases the shaft 21 such that when there is no external magnetic circuit present the shaft 21, and consequently the top rotatable magnet is held at an angle α₁ of about 30° from the fully off position. The fully off position is denoted by reference numeral 32. A high reluctance external magnetic circuit leads to a balance between the force provided by biasing spring 30, which tries to turn the device to the on position and the resistance of the internal magnetic field counteracting this force. This results in the device adopting a stable stand-by state. Closing the external magnetic circuit with a sufficiently low reluctance path will lower the internal magnetic field and the force provided by the biasing spring will now be sufficient to switch the device to the on position.

The apparatus shown in Figure 6, the device may be provided with a stop member 33 located before 180°, say at 175°. The stop member 33 may be as simple as a projection extending upwardly from the upper surface of the pole piece 12 of the device, which engages with it as lever 22 is turned towards the fully on position. Stop member 33 prevents the lever 22 from rotating to the fully on position. It is preferred that the lever 22 is allowed to rotate close to but below 180°, which allows the device to almost, but not quite, go into the fully on position. In this case, the device will return automatically to the low external field state if the external magnetic circuit is forcefully removed as described above. While the low reluctance external path is in place, the internal friction may be sufficient to hold the magnets in the switched on positioned, as discussed with reference to Figure 4.

In an alternative version of this embodiment, the rotation of the lever 22 can be permitted to go beyond 180° to a stop member (not shown) at, say 185°. When the lever 22 is rotated such that it is against the stop the internal magnetic field will push the movable magnet against the stop. Thus the device will remain in the fully on position if the external magnetic circuit is forcefully removed This may be thought of as the equivalent of a magnetic over-the-centre toggle.

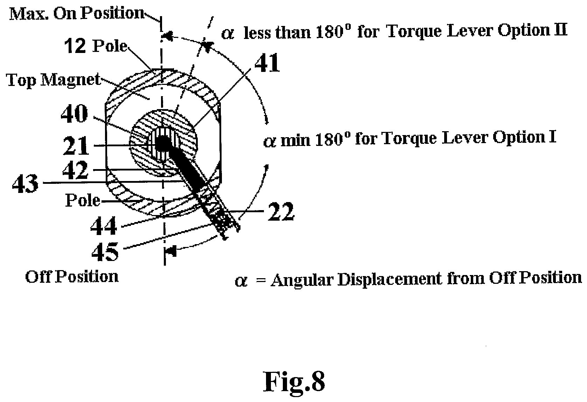

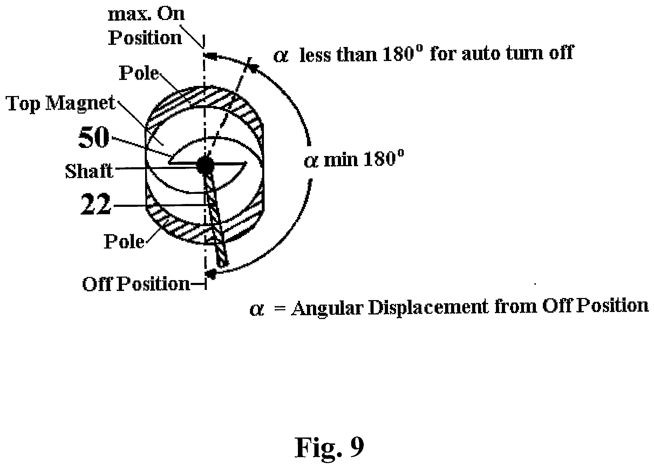

In some cases, it may be desirable to ensure that the reluctance of the external path is sufficiently low to reduce the turn-on force below a predetermined threshold, indicating that a predetermined amount of flux has been diverted through the external magnetic circuit before allowing the switchable magnetic device to be switched to the "on" position. This arrangement is examined with reference to Figures 8 & 9.

The handle may comprise a torque sensitive lever that does not allow a torque in excess of a predetermined amount to be applied to the one magnet. As described above, when there is no external load applied to the device, it requires more force to switch the device between active and inactive states. Use of a torque sensitive lever as part of the actuation means can result in it being impossible to switch the device between the active and inactive states if no sufficient external magnetic circuit is present. This feature may be utilised as a fail-safe feature to prevent an attempt to connect to an object where the magnetic coupling to the object is insufficient to safely lift the object.

In a first arrangement of the torque limited switch, the turning mechanism, eg handle or lever, is connected to the movable magnet through a torque sensing spring mechanism as shown in Figure 8. The relevant forces are shown in Figure 4B. If the required force to overcome the repulsive magnetic force exceeds the threshold shown in Figure9 , eg as shown at V on Plot C, this is an indication that insufficient flux has been diverted to the external magnetic path or, in other words, the reluctance of the external path is too high. When the force applied to the handle exceeds the threshold, the torque limiting device may act as a lost motion device allowing the lever to continue turning, but preventing transfer of the rotation to the movable magnet.

Figure 8 shows an embodiment of the invention utilising a torque lever as the actuation means. In this case, shaft 21 is surrounded by an inner ring 40 and an outer ring 41. Inner ring 40 contains a recess for receiving the pointed end of a piston 42. Outer ring 41 includes a passageway through which the piston 42 passes. Piston 42 is contained within an outer casing 43. Piston 42 is spring loaded by virtue of compression spring 44 which is positioned inside casing 43 and extends between piston 42 and adjustable grub screw 45. If an attempt is made to turn the lever 22 without an external magnetic circuit being present, the resistance to turning caused by the internal magnetic field of the device results in the force applied to the lever 22 exceeding a present value. This results in the tip of the piston 42 being displaced from the recess in inner ring 40 and the lever then slips together with the outer ring, thus disconnecting the flow of force to the inner ring, which is fixed to the shaft. The top magnet thus returns to the off state. In this way, a connection between an external magnetic circuit and the controlled turning-on function of the device can be realised.

In the embodiment shown in Figure 9, turning handle 22 is connected to the rotatable magnet via a flexible link, such as a spring 50. Spring 50 is selected such that it does not substantially deform if the turning handle 22 is rotated when the device is in the presence of an external magnetic circuit, such as when the device is placed on a ferromagnetic material. However, if the turning handle 22 is operated in the absence of an external magnetic field, the force required to rotate the magnet is much greater (see Figure 1) and the spring 50 deforms. This results in the turning handle rotation being taken up by the deformation in the spring 50 and thus the magnet does not rotate. Eventually, the turning handle may be rotated sufficiently far such that the spring 50 is fully deformed (or compressed) and further rotation of the turning handle 22 is translated into rotation of the magnet.

It will be appreciated that the force vs angular displacement diagrams shown in Figures 1A - 4B have been provided to illustrate the principles involved in the present invention. However, it will also be appreciated that the shape of the force vs angular displacement curves shown in Figures 1A to 4B are not necessarily correct and the actual shape of the curve may vary from that illustrated.

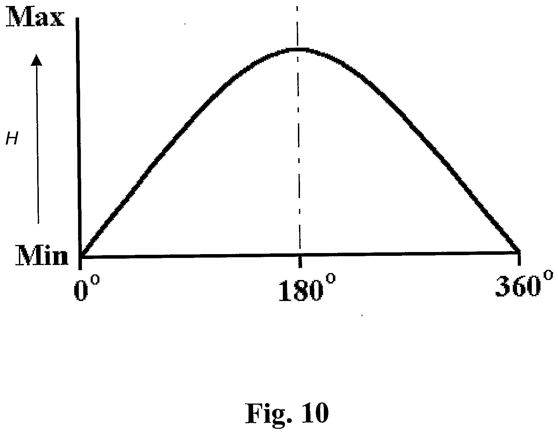

As described above, a switchable magnetic device as described herein can be used in states intermediate between the fully on and fully off positions. Figure 10 shows the analogue relationship between the angle of rotation and the variation of the external magnetic field. The exact characteristics of the curve depend on the way the magnets are magnetised in their physical shape as well as the shape of the poles (12, 13 of figure 5A). Variation of the ratio of the magnetic energy output of the magnetic discs 10, 11 can achieve further modification of the curve in figure 10 to suit particular applications.

Further increases in external magnetic field strengths can be accomplished by shaping the wall thickness of the pole pieces 12, 13 in such a way that they reflect the variation of the magnetic field strength around the perimeter of the permanently magnetised discs 10, 11.

Figure 5B indicates the design of the pole pieces 12, 13 shaped in accordance with the variation of the field strength H around the perimeter of the magnetic discs 10, 11. The application of the inverse square law of magnetic fields achieves good results but specific materials and applications influence the optimal pole shape. It has been ascertained that the wall thickness of the poles may be varied in a number of was including the following:
oval poles, where the wall thickness is a mathematical function of the field strength of the perimeter of the magnets;
oval poles, where the wall thickness is a mathematical function of the distribution of the magnetic mass of magnets 10 and 11;
round pole pieces, where the wall thickness is constant and the magnetic field strength is lower but uniform around the perimeter.

Figure 5B shows an embodiment having oval-shape poles which maximises the external field strength and assists in holding the device in place in incomplete magnetic circuits. Incomplete magnetic circuits are met in practice when there is an air gap between the bottom of the device and the surface to which it is to be attached, or where there is a non-magnetic material interposed between the surface to which the device is attached and the bottom of the device.

Preferably the poles are of the shortest possible length. The poles form part of the magnetic circuit (along with the magnets) and have an inherent magnetic resistance ("reluctance") which results in loss of magnetic energy. Thus, minimising the length of the poles minimises loss of magnetic energy and hence maximises the external field strength.

Embodiments of the present invention may be used as a switchable magnetic holding device. For example, the device may be used to clasp onto surfaces, especially metal surfaces. All sides of the switchable magnetic device can be utilised for attaching to magnetic materials. However, as the magnetic field intensity varies at different positions around the housing the holding force generated at different points around the housing will also vary. In preferred embodiments, the surface to which the device is affixed is located adjacent or underneath a lower surface of the lower magnet. In other embodiments, the surface to which the device is affixed is located adjacent or beside the side surfaces of the magnets. Thus in a preferred embodiment up to four sides of the switchable magnetic device can be used.

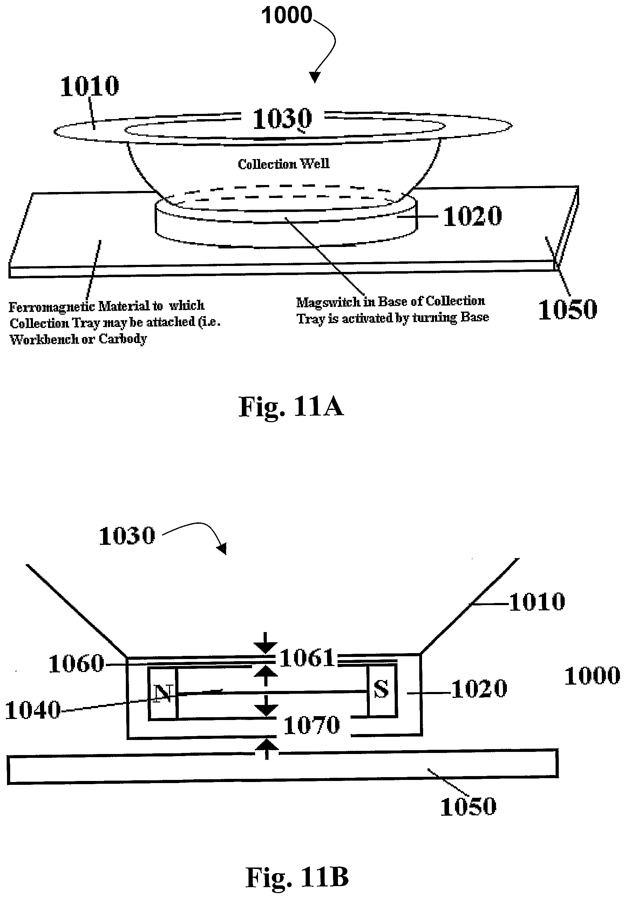

As will be further described in relation to figure 11B, each of the four sides of the switchable magnetic device can be used in a "flux-constant" arrangement by providing a suitable air gap or high reluctance path between the surface of the switchable magnetic device and the surface to which it is attached.

As described above the present invention is based on a switchable magnetic device as described in our previous co-pending application PCT/AU00/01505, thus the inventors have ascertained that that embodiments of the various aspects of the present invention can advantageously be made in a modular fashion. Thus the present invention additionally relates to a modular construction for a switchable magnetic device and modules used in such a device.

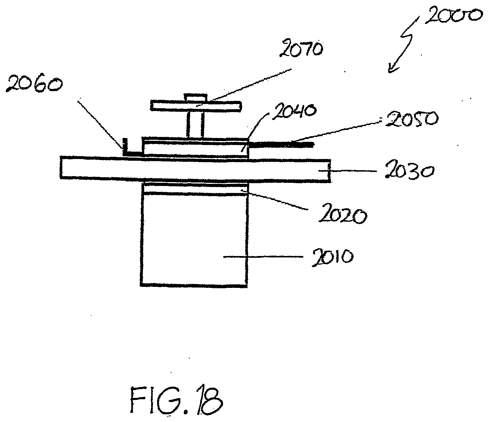

An embodiment of a switchable magnetic device having a modular construction will now be described with reference to figure 18. The basis of the modular switchable magnetic device 2000 is a switchable magnet device 2010 as described in connection with figure 5A and as further described in PCT/AU00/01505. Mounted on top of the switchable magnet device 2010 module, from bottom to top, are the following modules: a rotation limiting module 2020, a spring module 2030, an operation mode selection module 2040 and an actuator 2070.

The rotation limiting module 2020 is adapted to limit the rotation of the rotatable magnet to a predetermined angular range. Such a rotation limiting module 2020 can comprise a flat plate with a slot or aperture that is adapted to receive a pin or stop mounted on the top rotatable magnet of the switchable magnet device 2010. The slot is sized and shaped such that the range of angular rotation of the rotatable magnet is limited by the allowed travel of the pin or stop within the slot or aperture. The rotation limiting module 2020 may limit the range of angular rotation of the rotatable magnet to 180 degrees from the fully off position so that a user can easily turn the switchable magnetic device into the on position by fully rotating the actuation means. Alternatively the rotation limiting module 2020 may limit the range of angular rotation of the rotatable magnet to 185-190 degrees from the fully off position to take advantage of the "over centre toggle" operation of the switchable magnetic device as described above. The rotation limiting module 2020 may limit the range of angular rotation of the rotatable magnet to less than 180 degrees from the fully off position, for example 170 degrees, to provide an automatic turn-off function as described above.

The spring module 2030 includes a housing having a rotatable portion mounted therein which adapted to receive the actuation shaft of the switchable magnet device 2010, and one or more biasing means coupled to the rotatable portion to bias the actuation of the switchable magnet device 2010. Thus the spring module can provide automatic turn-on functionality.

The operation mode selection module 2040, according to the present embodiment includes two buttons 2050, 2060 which can be used to activate the automatic on or automatic off functions of the switchable magnetic device 2010. The operation mode selection module 2040 can be used with or without the rotation limiter module, and acts to selectively limit the range of angular rotation of the rotatable magnet to certain predetermined ranges which provide automatic off or "over centre" functionality. The operation mode selection module 2040 may also be configured to interact with the spring module to selectively allow tensioning of the bias means to above the threshold level to activate the automatic-on mode. The operation mode selection module 2040 may also include a locking means to lock the actuation means in a certain predetermined orientations, such as the on or off positions.

The thus described modular construction allows for a great deal of flexibility in manufacture. In particular, the switchable magnetic device may be produced in large numbers and appropriate module(s) added thereto, depending upon the described use of the product. It will also be appreciated that modules with different functionality to those described above may be used.

As will be appreciated by those skilled in the art, the features of the switchable magnetic device described herein render them suitable for use in a variety of applications in which switchable permanent magnetic devices have not previously been used.

Therefore, exemplary applications of the switchable magnetic device as described above will now be described by way of non-limiting example.

Figure 11A shows a collection tray 1000 employing a switchable magnetic device to according to an embodiment of the present invention. Such a collection tray can be magnetically attached to a ferromagnetic support surface 1050 and be used to collect ferromagnetic articles.

In this application, the magnetic fields at both the top and the bottom of the switchable magnetic device are utilised. The magnetic field at the bottom of the switchable magnetic device 1040 is used to retain the collection tray on the support surface 1050, whereas the magnetic field at the top of the switchable magnetic device 1040 is used to retain ferromagnetic articles in the collection well 1030 of the tray 1010.

Figure 11B shows a cutaway view of a base portion 1020 of the collection tray 1000. As can be seen in Figure 11B the base 1020 includes a switchable magnetic device 1040. The extent and permeability of any external magnetic circuit attached to the collection tray 1000, either in the form of articles retained in the bowl 1010, or in the form of a ferromagnetic surface on which the bowl is supported, will affect the magnetic field generated by the switchable magnetic device. In this regard, it is desirable that the magnetic field available to hold the tray 1000 to the support surface 1050 is generally independent of the thickness and magnetic properties of the support surface 1050. It is also desirable that when the collection tray 1000 is turned on, that the maximum possible magnetic field is available in the collection well 1030, and that when the magnetic field is turned off that there is minimum residual magnetisation in the collection well 1030. A collection tray having these desirable magnetic quality can be achieved by providing the high permeability shunt 1060 in the air gap 1061 between the collection well 1030 of the bowl 1010, and the top surface of the switchable magnetic device 1040, and by providing a second, larger air gap 1070 between the bottom surface of the switchable magnetic device 1040 and the support surface 1050. The residual field shunt 1060 should have as low a reluctance as possible. Ideally, the size of the shunt 1060 and the material for the shunt 1060 should chosen so as to be so small that any residual magnetic flux when the switchable magnetic device 1040 is in the off position will almost saturate the shunt. Thus, when the switchable magnetic device 1040 is switched to the on position the residual field shunt 1060 becomes saturated and thus effectively becomes an air gap.

In order to ensure that the magnetic field is decoupled from the affect of the support surface, and therefore that the magnetic field remains of substantially constant flux irrespective of the surface's magnetic properties, and to ensure that maximum field strength is present in the bowl 1030 of the collection tray it is preferable that the air gap 1061 should be significantly smaller than the air gap 1070.

The operation of the collection tray is further enhanced by the fact that when the switchable magnetic device 1040 is turned off the magnetic field within the collection well 1030 of the tray 1010 rotates and reverses its direction. This helps to demagnetise the collected particles.

A further application of a switchable magnetic device is in magnetic latches and couplings for use in doors or windows or the like. Latches incorporating a switchable magnetic device generally fall into two categories, namely those using switchable permanent magnet to actuate a moveable locking element or the like, and those which use magnetic attraction as a securing means. A number of embodiments of latches will now be described which utilise one or the other of these latching mechanisms. Whilst these exemplary embodiments will be described in connection with latching doors or windows it is envisaged that these embodiments may be generally applicable to latching any moveable article, for example tool box lids, cupboard doors etc.

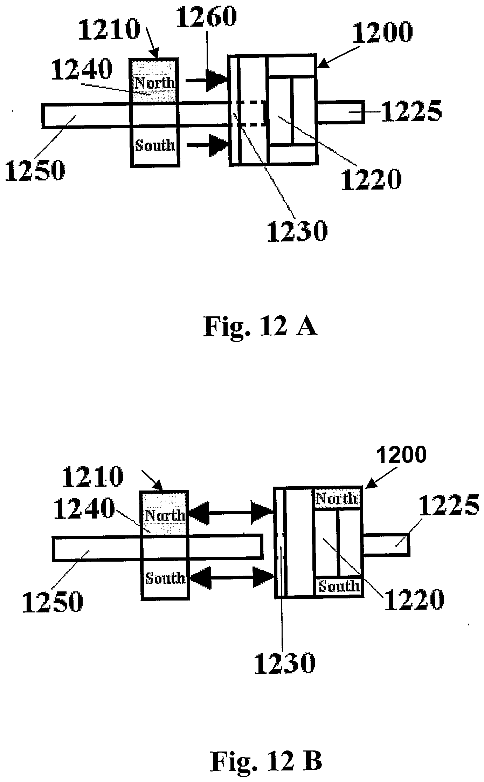

Figures 12A and 12B show schematic representations of a latching mechanism using a switchable magnetic device to move a locking pin. The latch includes two portions, the first portion 1200 which may be mounted within a door or the like, and the second portion 1210 which may be mounted in the door jamb or other surface against which the door closes. Clearly the portions 1200 and 1210 of the latch may be interchangeably mounted in the door or door jamb.

The first portion 1200 of the locking device includes a switchable magnetic device 1220 having an actuation member 1225 attached thereto. The actuation member 1225 is further attached to a handle or other means to allow movement of the actuation member 1225. Attached to the other side of the switchable magnetic device is a ferromagnetic mating recess 1230 into which a locking pin can be received. Thus the first portion 1200 generally comprises a recess in a ferromagnetic material which may have a magnetic field selectively applied to it. The second component 1210 is slideably mounted to the door jamb, and includes a permanent magnetic portion 1240 mounted to a slideable locking pin 1250. The second portion 1210 is mounted in a recess in either the door or door jamb at a suitable position to engage the first portion 1200 when the door is in the locked position.

In figure 12A the switchable magnetic device 1220 is turned off and therefore the ferromagnetic recess 1230 has no magnetic field. In this condition, when the door is closed against the door jamb the permanent magnet 1240 mounted on the slideable locking pin 1250 will be attracted toward the ferromagnetic material of the recess 1230, as denoted by arrows 1260. This draws the locking pin 1250 into the recess 1230 and locks the two components 1200 and 1210, thereby locking the door to the door jamb. When the actuation handle 1225 is rotated the switchable magnetic device 1220 is turned on creating an external magnetic field. Figure 12B shows a similar view to that of figure 12A with the exception that the switchable magnetic device is generating an external magnetic field. The polarity of the external magnetic field generated by switchable magnetic device 1220 is aligned with that of the fixed permanent magnet 1240 mounted on the locking pin 1250. The alignment of the magnetic fields of the permanent magnet 1240 and the switchable magnetic device 1220 causes a repulsive force to be set up between the magnetic elements which pushes the locking pin 1250 from the recess 1230 of the first component 1200, and thus unlock the door.

As will be appreciated by those skilled in the art various alternative embodiments based on a similar principle to the latch described above may be devised. One preferred embodiment includes both the slideable locking member having the permanent magnet and the switchable magnetic device in the door, and uses an attractive force created by the counter alignment of the magnetic fields to retract the locking pin fixed to the permanent magnet into the door. In this embodiment locking can be achieved either through biasing the locking pin into the locked position using a spring or the like, or by allowing the permanent magnet to be attracted to ferromagnetic striking surface on the door jamb.

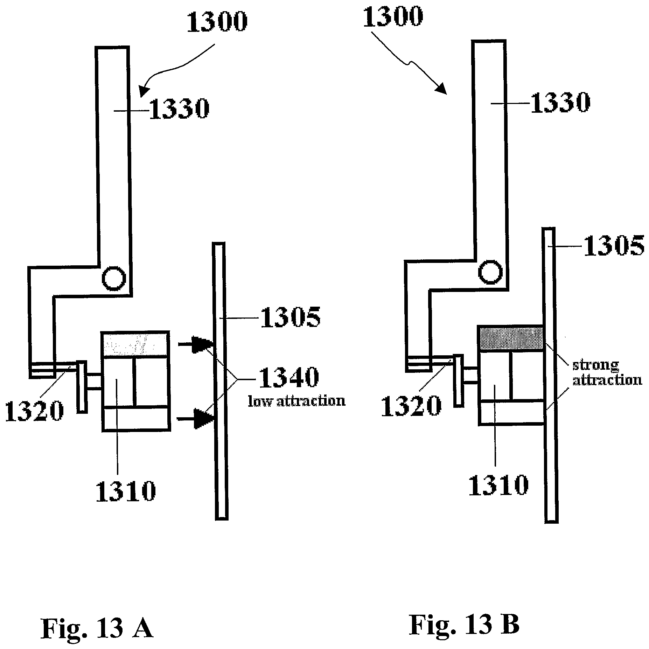

Figures 13A and 13B show a second variation of a latch mechanism employing a switchable magnetic device of the type described above. In this variation the latch 1300 includes a switchable magnetic device 1310, which will typically be mounted on a door or the like, and striker plate 1305 mounted to a door jamb. The striker plate 1305 and switchable magnetic device 1310 are aligned such that when the door is closed the switchable magnetic device 1310 comes into contact with the striker 1305. The striker 1305 is made from a ferromagnetic material. In this embodiment it should be noted that the switchable magnetic device is not used to actuate a locking pin or other mechanical latch means, but rather that it creates a magnetic attraction between the door and the door jamb which must be overcome to open the door, thus the magnetic attraction provides the securing element of the latch 1300.

In this embodiment a switchable magnetic device having an automatic-on feature as described in relation to Figure 6 is preferably used. A switchable magnetic device additionally having an automatic-off feature can also be used, as will be described below.

As described above the switchable magnetic device with automatic-on creates a small residual magnetic field which, causes a force drawing the door toward the latched position when the door is in close proximity with the striker. Once the door touches the striker, as shown in Figure 13B the switchable magnetic device is triggered into the "on" position causing a much larger magnetic field which latches the door to the striker 1305.

The door can now only be opened if sufficient force is applied to the latch to separate the switchable magnetic device 1310 from the striker 1305, or by switching the switchable magnetic device to the "off' position. Switching the switchable magnetic device 1310 to the off position is achieved by turning the handle 1330, which is attached to the actuation means 1320 of the switchable magnetic device1310.

Latches according to this embodiment are particularly suited to uses where privacy rather than security is required, such as in internal doors in hospitals, aged care facilities or the like. The ability to forcibly open the door without tools renders the latch particularly suited for environments in which emergency access to a room is required.

As mentioned above a switchable magnetic device having an automatic-off facility as described in relation to figure 7 can advantageously be used. This ensures that in an situation where a door is forcibly unlatched the switchable magnetic device automatically returns to a low magnetism state.

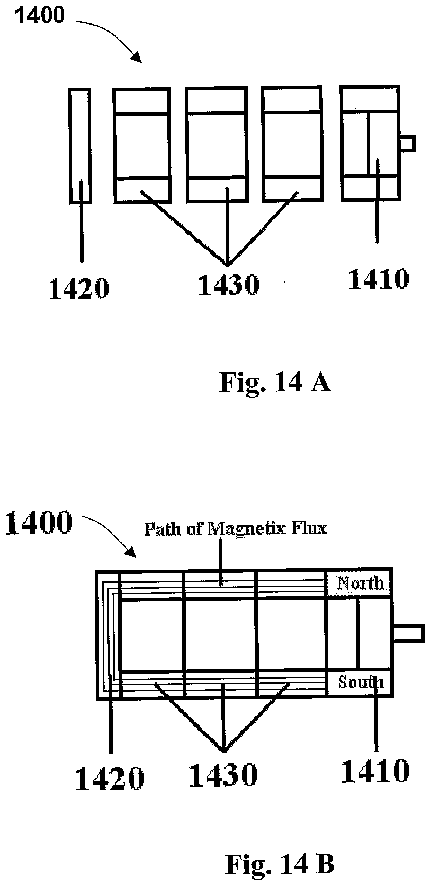

Figures 14A and 14B show a further embodiment of a latching mechanism which includes a switchable magnetic device according to an embodiment of the present invention. The latch 1400 of this embodiment is suited for latching articles with multiple components, such as concertina type doors or windows with shutters etc. The latch 1400 includes a variable number of components, depending on the number of movable parts to be latched, and includes a switchable magnetic device 1410 which is held in fixed relationship to the desired latched position, and an end plate 1420 which is formed of ferromagnetic material, mounted in a position aligned with the switchable magnetic device 1410 on the farthest component of the plurality of movable parts to be latched. On each intermediate movable part to be latched there is positioned an intermediate latching member 1430 which is also formed of ferromagnetic material. In the unlatched position, as shown in figure 14A the switchable magnetic device 1410 is turned off and the movable parts of the article are free to move as there is little or no residual magnetic field. In order to latch the movable parts the movable parts are brought into contact, such that the intermediate latching members 1430, and end plate 1420 are aligned with the switchable magnetic device 1410, as shown in figure 14B. In this position the switchable magnetic device 1410 can be turned on and a magnetic circuit is set up between the intermediate latching members 1430, end plate 1420 and the switchable magnetic device 1410, thus holding the movable parts in a latched position.

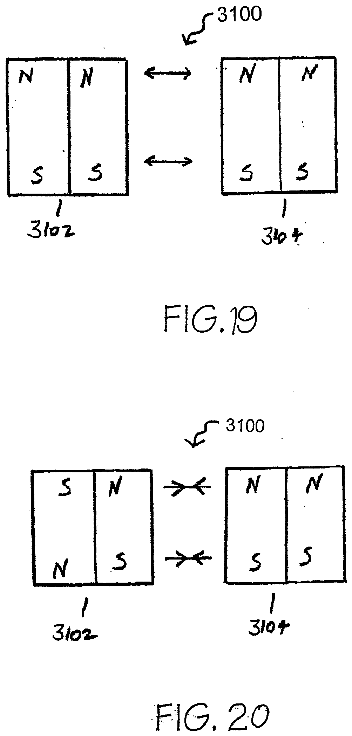

Referring now to Figures 19 and 20, which show a further latching or coupling means in accordance with the present invention, In this embodiment the coupling 3100 comprises a first switchable magnetic device 3102 and a second switchable magnetic device 3104. In Figure 19, both switchable magnetic devices 3102, 3104 are in an "on" position. Moreover, it can be seen that devices 3102, 3104 are arranged such that when they are in the "on" position, their respective north and south poles are in alignment. In the configuration shown in Figure 19, the two magnetic devices 3102, 3104 repel each other.

In the configuration shown in Figure 20, switchable magnetic device 3102 has been switched to the "off' position so that it presents a relatively weak or insignificant external magnetic field. As switchable magnetic device 3102 includes ferromagnetic material, it is attracted to second switchable magnetic device 3104, which is still in the "on" position. Thus, the coupling 3100 can actively couple. Switching the switchable magnetic device 102 to the "on" position shown in Figure 19 will cause repulsion and the coupling will actively uncouple.

The coupling shown in Figures 19 and 20 also allows second switchable magnetic device 3104 to be switched to an "off' position. If switchable magnetic devices 3102, 3104 are both switched to an "off" position, the coupling goes into a passive state in which neither attraction nor repulsion occurs. If such a passive state is not required, on of the switchable magnetic devices 3102, 3104 may be substituted by a magnet, such as a permanent magnet.

The first and second magnetic devices should be arranged such that they can move relatively towards and away from each other to allow coupling and uncoupling thereof. For example the first magnetic device can be mounted in a door, and the second magnetic device mounted in a door jamb, such that opening and closing of the door

In embodiments where the first and/or second magnetic devices are switchable magnetic devices, they are preferably as described with reference to any the of the exemplary switchable magnetic devices described herein.

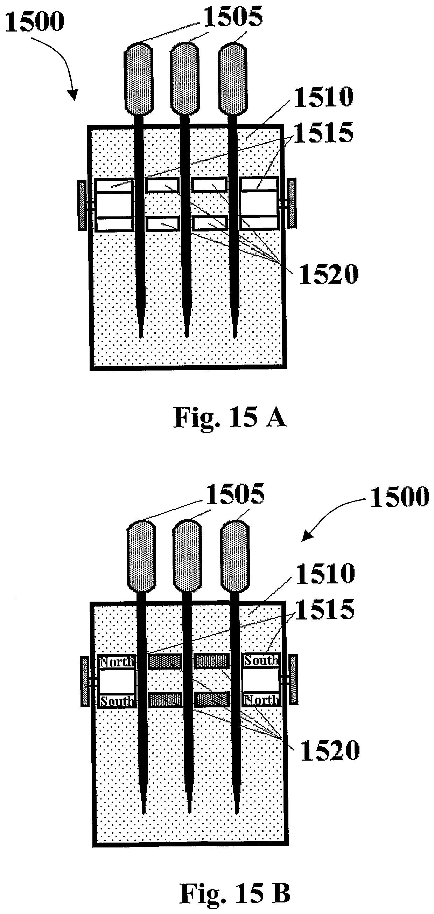

A similar principal to the latch for concertina type doors can be used to lock articles into a holder. The holder described in connection with figures 15A and 15B is described as a cutlery holder, however as will be appreciated the holder can also be used to hold non-ferromagnetic articles of relatively narrow thickness, and therefore should not be viewed as being limited to holding ferromagnetic articles or cutlery.

An embodiment of a holder using a switchable magnetic device which is adapted to hold cutlery will now be described in connection with Figures 15A and 15B. Unsecured cutlery can be a hazard in the kitchen, especially for children. However, previously known means for locking knives or the like into knife blocks have been limited to mechanical devices which are relatively limited in their application, in so far as, that they are generally only able to lock specific sized knives in predetermined slots in a knife block. Figures 15A and 15 B show a cutlery block incorporating a switchable magnetic device, which overcomes many of the drawbacks of previously known cutlery blocks.

Figures 15A and 15 B show an exemplary cutlery block 1500 which is configured to hold 4 knives 1505. Clearly a holder of the type described can be designed that will hold more or fewer items than the present embodiment and therefore the present aspect of the invention should not be considered to be limited to any particular holding capacity.

In figure 15A the switchable magnetic devices are shown in their off position and cutlery can freely be withdrawn from, and placed into the block. Whereas figure 15B shows the cutlery block in a configuration in which the cutlery is locked.

The cutlery block 1500 includes a main body 1510 which will typically have a plurality of cutlery receiving apertures or slots therein (not shown). The cutlery block 1500 also includes two switchable magnetic devices 1515 on opposite sides of the block 1510 in alignment with a row of cutlery 1505 to be held in the block. The one or both of the switchable magnetic devices 1515 are slideably mounted so that the relative separation between the switchable magnetic devices can be varied. The switchable magnetic devices 1515 are mounted such that when they are turned on their magnetic poles are oppositely aligned. Mounted between the switchable magnetic devices 1505 are a plurality of slideable intermediate members 1520 which are made from high permeability ferromagnetic material. The facing surfaces of the intermediate members 1520 and switchable magnetic devices 1515 define gaps into which the cutlery 1505 is inserted.

To lock cutlery in the block 1500 the two switchable magnetic devices 1515 are turned on. This sets up a magnetic field which is conducted through a magnetic circuit formed by the switchable magnetic devices 1515, slideable intermediate members 1520 and the engaged portions of the articles of cutlery 1505, which firmly holds the cutlery in the block, clamped between the switchable magnetic devices 1505 and the intermediate members. In a cutlery block of this type a number of additional magnetic circuits are set up as the items being clamped are typically ferromagnetic. Magnetic circuits between adjacent items of cutlery are also present which act to increase the clamping force on the cutlery.

It is preferable that the actuation means of the two switchable magnetic devices 1515 are connected together in such a way that they can be turned on and off in concert. As will be readily apparent the ends of the intermediate members can additionally be contoured to suit particular articles of cutlery, such as sharpening steels or the like, in order to produce the maximum holding force.

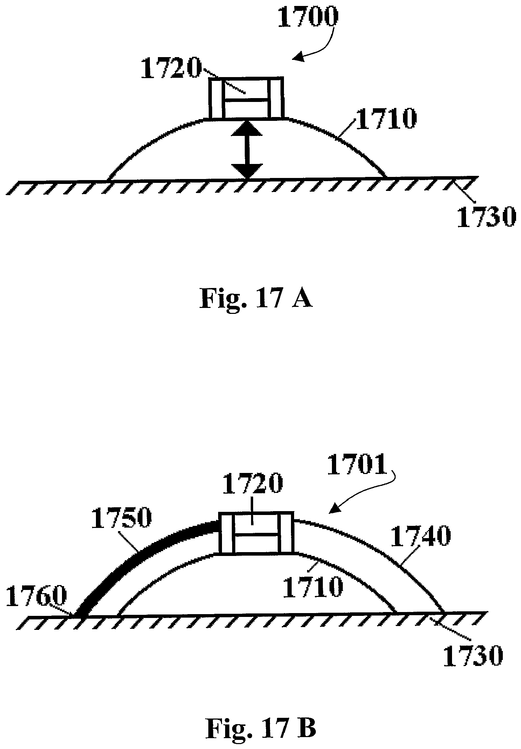

Another application of a switchable magnetic device in is a holding device which can be advantageously used to grip surfaces with ferromagnetic properties, such as sheet-metal, motor car panels, refrigerators etc. The preferred embodiment of the holding device is a hybrid between a suction cup, or vacuum pad, and a magnetic holder. The holding device 1700 shown in figure 17 includes a deformable skirt portion 1710, which is generally similar to those used in known suction cups or vacuum pads, and a switchable magnetic device 1720 centrally mounted on the skirt 1710.

The deformable skirt portion 1710 operates in the same manner as prior art suction cup and creates a suction force towards the surface 1730 by partially evacuating the air from inside the void formed between the skirt 1710 and the surface 1730. The switchable magnetic device 1720 generates a magnetic attraction towards the surface when it is turned on and thereby acts to re-establish or maintain the seal between the deformable skirt portion 1710 and the surface if the seal is broken or partially broken. By turning off the switchable magnetic device the magnetic attraction between the switchable magnetic device 1720 and the surface 1730 is removed and the seal can be more easily broken to allow removal of the holder 1700 from the surface. Alternatively a valve can be added to allow release of the suction pressure. Preferably the same actuation means can be used to turn off the switchable magnetic device 1720 and release the suction in the skirt 1710.

A switchable magnetic device having an automatic turn-on feature will be particularly advantageous in the present embodiment. If such an switchable magnetic device is employed, the user can simply push the holder onto the surface to attach the holder. The act of pushing the holder will evacuate the skirt to create a suction force, and also to turn on the switchable magnetic device to generate the magnetic holding force.

Figure 17B shows an alternative embodiment of a holder 1701 similar to that shown in figure 17A. Like parts have been like numbered. The only difference between the two embodiments is the addition of a substantially rigid support shell 1740 in the embodiment of figure 17B. The support shell can be made of a plastics material and be used to provide added stability and prevent rocking of the holder which may cause breaking of the seal between the skirt 1710 and the surface 1730. However, in a particularly preferred embodiment the support shell includes at least two portions e.g. 1750 which are formed of ferromagnetic material, and which extend from a position adjacent the switchable magnetic device to the peripheral edge 1760 of the shell 1740, and act as magnetic pole extensions. Preferably the ferromagnetic portions of the shell 1740 are positioned such that they are come into contact with the surface on which the holder 1700 is engaged when the suction and magnetic field is applied. Therefore, as the magnetic pole extensions are be closer to the surface than the main body of the switchable magnetic device 1720 the magnetic attraction between the holder 1700 and the surface is increased.

Switchable magnetic devices present advantages over permanent magnets for applications in which stray magnetic fields may cause damage, for example in space and satellite applications. Because switchable magnetic devices can be put into an "off' state in which the external magnetic field produced by the device is minimised, the chances of the switchable magnetic device interfering with the launch craft or satellite systems are reduced.

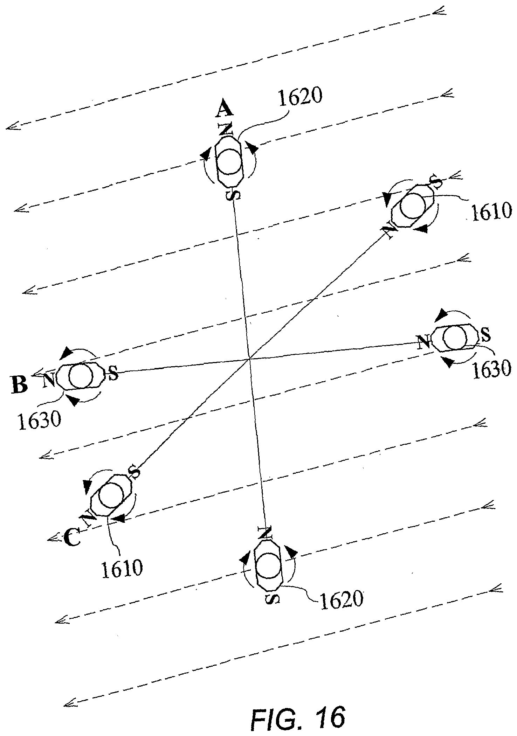

A plurality of switchable magnetic devices can be used to control the orientation of a satellite in orbit around a planet. An orientation control system (OCS) for a satellite which employs at least one pair of switchable magnetic device and a method for controlling such a satellite will now be described in connection with figure 16.

The OCS depicted in figure 16 includes three pairs 1610, 1620, 1630 of switchable magnetic devices which are mounted to the satellite and controlled by the satellite's guidance system. Each of the pairs 1610, 1620, 1630 of switchable magnetic devices interacts with the planet's magnetosphere and is used to control the orientation of the satellite in one plane and achieves this in a manner analogous to a compass needle. The switchable magnetic devices 1610, 1620, 1630 are each rotatably mounted on the satellite and are driven, by a drive means, in concert with its counterpart to choose the direction of rotation of the satellite during reorientation. Each pair of switchable magnetic devices control the orientation of the satellite in one plane.

When the switchable magnetic devices of one pair are turned on they will attempt to align that axis of satellite with an external magnetic field. And when they are turned off no further rotational motion will be applied o the satellite. Thus, by selectively varying the alignment of the magnets of the switchable magnetic devices between (and including) the on and off positions, to change the external magnetic field generated, and by changing their orientation relative to the satellite the orientation of a satellite in 3 dimensions can be altered.

A switchable magnetic device can also be used to create a magnetic field to deflect electrically charged or magnetic particles. The degree of deflection can be controlled by varying the external magnetic field produced by the switchable magnetic device by changing the relative orientation of the magnets of the switchable magnetic device (as described in connection with figure 10).

For example a magnetic field can be used to deflect charged particles from around a space craft or satellite, in the same way as the magnetosphere deflects particles from around the Earth. A switchable magnetic device can be mounted toward an "upstream" end of a space craft or satellite and switched to the on position to generate a large external magnetic field which will interact with moving charged particles or magnetic particles to deflect them from colliding with the space craft. As described above because the switchable magnetic device can be switched on or off when required interference with satellite or craft systems can be minimised.

### Interaction between a switchable magnetic device and the magnetosphere can also be used to provide short range acceleration in space, for example to position or recover an astronaut during a space walk.

Further applications of switchable magnetic devices according to an embodiment of the present invention may also be devised. For example one or more switchable magnetic devices can be used to secure hose couplings during transfer of liquids or gasses. In such an application a switchable magnetic device having an automatic-on feature is particularly advantageous, as the person making the connection is not required to perform any additional step to cause the magnetic securement to take place.

A switchable magnetic device can also be used as an electrical connection for welding or the like. In use the magnet can be used to hold the work pieces being welded as well as provide an electrical connection between the welder and the workpiece. Preferably the housing which retains the magnets is additionally used to form the electrical connection between the power source and the metal being welded. Advantageously a switchable magnetic device using rare-earth magnets is employed in welding application. Rare earth magnets have high coercivity and therefore are will not demagnetise at the high electric currents likely to be encountered in such a use.

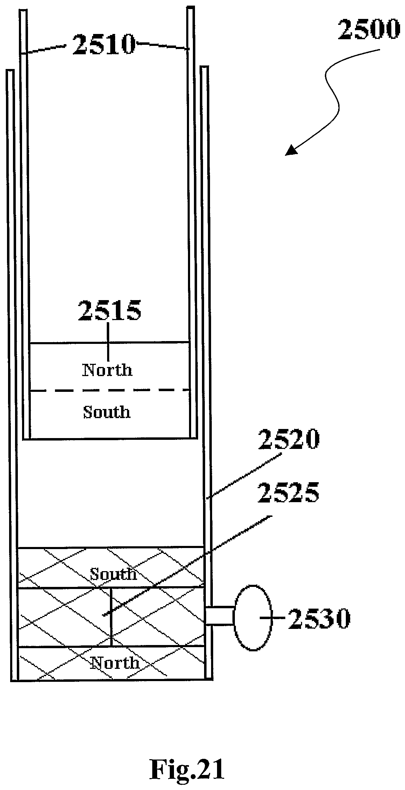

Figure 21 shows a cutaway schematic view of a tunable suspension system using a switchable magnetic device. The suspension system 2500 includes a piston mounted such that it can reciprocate within a cylinder 2520. Mounted at the lower end of the piston 2510 is a permanent magnet 2515. Mounted at the base of the cylinder 2520 is a switchable magnetic device 2525 which includes an actuation means 2530, that is adapted to change the relative orientation of the magnets of the switchable magnetic device 2525 to vary the external magnetic field presented by the switchable magnetic device 2525. The magnet 2515 mounted on the end of piston 2510, and the switchable magnetic device 2525 are aligned such that when the switchable magnetic device is turned on they will repel each other. Thus, when the switchable magnetic device is in the on position the piston 2510 is suspended within the cylinder 2520 and is able to reciprocate up and down within the cylinder. The repulsive force between the permanent magnet 2515 and the switchable magnetic device 2525 behaves like a spring to moveably support the piston 2510.

As described above the external field presented by the switchable magnetic device magnetic device 2525 varies depending on the degree of alignment between the magnets of the switchable magnetic device 2525. This variable external field can be used to vary the level of repulsion between the magnets 2515 and the switchable magnetic device 2525, and thus providing a tunable suspension system. By increasing the external field of the switchable magnetic device the equilibrium position of the piston 2510 is raised relative to the cylinder 2520, and conversely by decreasing the external strength of the switchable magnetic device 2525 the equilibrium position of the piston 2510 relative to the cylinder 2520 is lowered. The force required to force the piston 2510 toward the switchable magnetic device 2525 also increases with increasing strength of the external field of the switchable magnetic device.

In the preferred embodiments of the suspension system as described above the piston 2510 includes a highly electrical conductive portion adjacent to its lower end. The highly conductive portion can be made by copper or aluminium or other highly conductive material. The highly conductive portion is provided to introduce a damping effect to the suspension system. The highly conductive portion of the piston 2510 when moving within the magnetic field presented by the switchable magnetic device will create eddy currents in the electrically conductive portion of the piston 2510 thereby causing a damping affect on the oscillation of the piston 2510 within the cylinder 2520.

As will be appreciated by those skilled in the art the suspension system 2500 as described above can advantageously be used in place of coil springs, and or hydraulic or pneumatic damping means.

Furthermore, when the switchable magnetic device is turned into the fully off position the magnet 2515 mounted on the piston 2510 is attracted to the ferromagnetic pole portion 2526 of the switchable magnetic device 2525 and causes the suspension means to lock in a retracted position.

As will be appreciated by those skilled in the art the permanent magnet 2515 may be replaced by a second switchable magnetic device to provide additional tunability to the suspension system, and to prevent locking of the suspension when the other switchable magnetic device is in the off position. The relative positions of the switchable magnetic device and permanent magnet 2515 may be interchanged. Furthermore, it will be appreciated by those skilled in the art that a suspension system employing one or more switchable magnetic devices need not take the form of a piston and cylinder, and can include any arrangement where relatively moveable members can have opposing magnetic devices associated therewith.

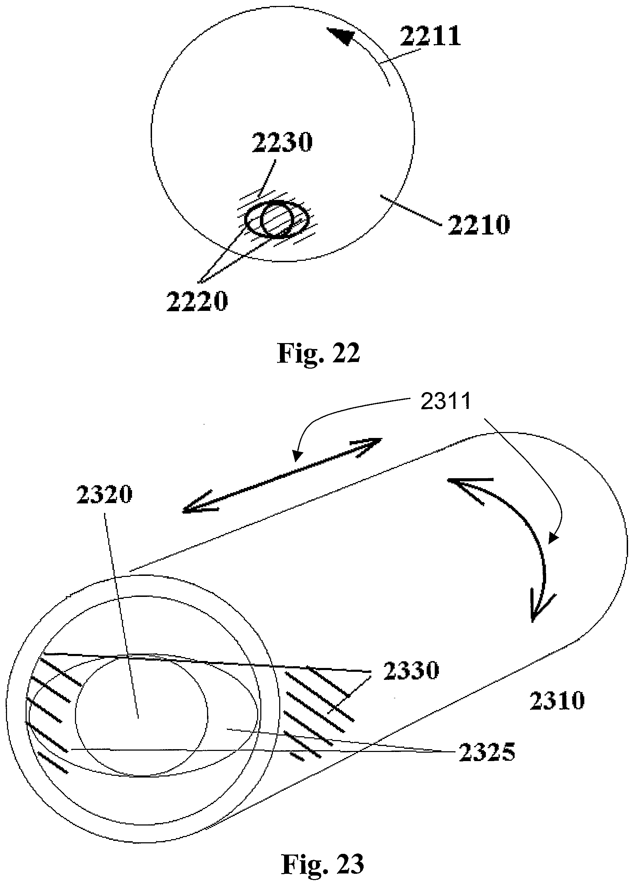

Figures 22 and 23 show two arrangements for providing a variable braking device using a switchable magnetic device. The arrangement shown in figure 22 and 23 rely on the principle that eddy currents will be induced in a body of conductive material moving relative to a magnetic field, and that these eddy currents will cause a braking effect in the relatively moving bodies. The variability of the external magnetic field provided by a switchable magnetic device can advantageously be employed in an eddy current braking device to provide variable strength braking.

Turning now to figure 22 which shows a disk 2210 which has switchable magnetic device 2220 mounted adjacent to its side face. The disk 2210 is rotating in the direction of arrow 2211 with respect to the switchable magnetic device 2220. The relative motion of the disk 2210 and the switchable magnetic device 2220 will cause eddy currents in the disk 2210 in the area 2230 adjacent to the switchable magnetic device when the switchable magnetic device is presenting an external magnetic field. The strength of the eddy currents, and hence the strength of the braking force can be increased by increasing the relative alignment of the magnets of the switchable magnetic device 2220 such that the external magnetic field presented increases. To decrease the braking force the relative alignment of the magnets of the switchable magnetic device 2220 can be decreased (ie the magnets can be moved towards the off position).

Figure 23 shows an alternative arrangement to provide braking using switchable magnetic device. In this embodiment the switchable magnetic device 2320 is mounted within a cylinder 2310 which is movable in the directions indicated by arrows 2311 relative to the switchable magnetic device 2320. The switchable magnetic device 2320 is arranged such that its poles 2325 extend across the diameter of the cylinder 2310. In this embodiment the switchable magnetic device 2320 will induce eddy currents in regions 2330 of the moving cylinder 2310 when the switchable magnetic device is in the on position.

Again by varying the alignment of the magnets of the switchable magnetic device 2320 the extent of the eddy currents 2330 can be varied, and thus the braking effect on the cylinder 2310 can be varied.

As will be appreciated by those skilled in the art the variable braking principle using a switchable magnetic device can include a plurality of switchable magnetic devices mounted relative to a movable conductive member. Furthermore, the switchable magnetic device can be arranged to move around a fixed conductive member to provide braking affect on the switchable magnetic device. Furthermore, both the switchable magnetic device(s) and the conductive member may be movable.

As will be appreciated by those skilled in the art the switchable magnetic device as described herein can be advantageously employed in any application where a magnetic field is desired, and in particular, may be employed where a magnetic field of variable strength is desired. Accordingly, the present invention should be considered to extend to all applications of a switchable magnetic device of any one of the embodiments described herein.

Those skilled in the art will appreciate that the present invention may be susceptible to variations and modifications other than those specifically described. It is to be understood that the present invention encompasses all such variations and modifications that fall within the scope of the appended claims.

## Claims

1. A switchable magnetic device of the kind including a housing (12,13), a first permanent magnet (10), a second permanent magnet (11), the first and second permanent magnets being mounted within the housing (12,13) such that the first and second permanent magnets (10;11) are rotatable relative to each other, and actuation means (22) adapted to cause relative rotation of the first and second permanent magnets (10;11) wherein the first and second magnets are rotatable relative to each other between a "fully off" position in which north and south poles of the first permanent magnet (10) are in alignment with south and north poles, respectively, of the second permanent magnet (11) and the magnetic device presents a minimal external magnetic field, and a "fully on" position in which the north and south poles of the first permanent magnet (10) are positioned in alignment with the north and south poles, respectively, of the second permanent magnet (11) and the magnetic device presents a maximal external magnetic field,
**characterised in that** the magnetic device is placeable into contact with or in close proximity to an external ferromagnetic material (1050, 1230, 1305, 1420, 1730) releasably attachable to the magnetic device,
the magnetic device further includes either one or both of
(a) automatic turn-on means (21,30) arranged for automatically switching the magnetic device to an "on" position, in which the magnetic device presents a relatively strong external magnetic field, when the magnetic device is brought into contact with or is in close proximity to the external ferromagnetic material, and
(b) automatic turn-off means (33) arranged for automatically switching the magnetic device to an "off" position, in which the magnetic device presents a relatively weak external magnetic field, when the magnetic device is removed from contact with or from close proximity to the external ferromagnetic material,
**in that** the automatic turn-on means (21, 30) include biasing means (30) operatively associated with the first and second permanent magnets (10;11) to bias the relative rotational position of the first and second permanent magnets (10;11) away from the "fully off" position and cause the relative rotation of the first and second permanent magnets towards the 'fully on' position when the device is placed on or in close proximity to the external ferromagnetic material,
and **in that** the automatic turn-off means include rotation limiting means (33) operatively associated with a rotatable one of the first and second permanent magnets (10;11) to releasably hold the rotatable permanent magnet (10) in a rotational position in which the magnetic device presents a strong external magnetic field and which is close to but rotationally off-set from the "fully on" position.

2. A magnetic device as claimed in claim 1, wherein the first and second permanent magnets (10;11) are cylindrical or disc-shaped, diametrically polarised and are stacked one above the other within the housing (12,13) such as to be rotatable relative to one another about a common axis passing through a centre point of the first and second permanent magnets (10;11).

3. A magnetic device as claimed in claim 1 or 2, wherein the biasing means (30) is arranged to apply a rotational force (F) to cause relative rotation of the first and second permanent magnets (10;11) towards the 'fully on' position which has a value that is lower than a rotational first peak force (F2) required to cause relative rotation of the first and second permanent magnets (10;11) toward the "fully on" position when the magnetic device is not in contact with nor close proximity to the ferromagnetic material, but which has a value that is higher than a rotational second peak force (F1) required to cause relative rotation of the first and second permanent magnets (10;11) toward the "fully on" position when the magnetic device is in contact with or is in close proximity to the external ferromagnetic material.

4. A magnetic device as claimed in claim 3, wherein the biasing force (F) is of such value that the north and south poles of the rotatable one of the first and second permanent magnets (10;11), respectively, are rotationally off-set from the "fully off" position by an angle of 10 to 60 degrees, preferably 30 degrees, when the magnetic device is not in contact with nor in close vicinity to the external ferromagnetic material.

5. A magnetic device as claimed in claim 3 or 4, wherein the biasing means (30) is a spring.

6. A magnetic device as claimed in any one of claims 1 to 5, wherein the rotation limiting means (33) is arranged to permit relative rotation of the first and second permanent magnets (10;11) from an activated state, in which the magnetic device presents a relatively strong external magnetic field, into a deactivated state, in which the magnetic device presents a relatively weak external magnetic field, when the magnetic device is removed from contact with or close proximity to the external ferromagnetic material.

7. A magnetic device as claimed in claim 6, wherein in the deactivated state the north and south poles of the first permanent magnet (10) and the south and north poles, respectively, of the second permanent magnet (11) are rotationally misaligned by 50 degrees or less, preferably 30 degrees or less.

8. A magnetic device as claimed in claim 6, wherein in the deactivated state the north and south poles of the first permanent magnet (10) and the south and north poles, respectively, of the second permanent magnet (11) are rotationally aligned and the magnetic device is in the "fully off" position.

9. A magnetic device as claimed in claim 6, wherein in the activated state the north and south poles of the first permanent magnet (10) and the north and south poles, respectively, of the second permanent magnet (11) are rotationally misaligned by less than 15 degrees, preferably by about 10 degrees.

10. A magnetic device as claimed in any one of claims 6 to 9, wherein the rotation limiting means (33) is arranged to limit the relative rotation of the first and second permanent magnets (10; 11) to less than or equal to 180 degrees.

11. A magnetic device as claimed in claim 6, wherein the rotation limiting means (33) is arranged to prevent the first and second permanent magnets (10; 11) assuming the "fully on" position.

12. A magnetic device as claimed in claim 11, wherein the rotation limiting means (33) comprise a stop means arranged to either (i) prevent rotation of the actuation means (22) to switch the movable one of the first and second permanent magnets (10;11) into the "fully on" position or (ii) to selectively engage with the movable one of the first and second permanent magnets (10; 11) to prevent its rotation into the "fully on" position.

13. A device as claimed in claim 6, wherein the rotation limiting means is arranged to apply a retaining force to retain the movable one of the first and second permanent magnets (10; 11) in the activated position when the magnetic device is in contact with or is in close proximity to the external ferromagnetic material, the retaining force applied to hold the permanent magnets (10; 11) in the activated position being greater than a first force required to maintain the permanent magnets (10;11) in the activated state when the magnetic device is in contact with or close proximity to the external ferromagnetic material but is smaller than a second force required to maintain the permanent magnets (10;11) in the activated state when the magnetic device is not in contact with nor in close proximity to the external ferromagnetic material, thereby allowing the movable one or ones of the first and second permanent magnets (10;11) to automatically rotate toward the deactivated state when the magnetic device is removed from a position in contact with or in close proximity to the external ferromagnetic material.

14. A magnetic device as claimed in claim 13, wherein the retaining force is a friction force generated by the moveable one of the permanent magnets (10;11) within the housing (12,13) of the magnetic device.

15. A device as claimed in claim 13, wherein the rotation limiting means comprises a retaining device configured to apply the retaining force to retain the movable one or ones of the first and second permanent magnets (10;11) in the activated position when the magnetic device is in contact with or in close proximity to the external ferromagnetic material, the retaining device preferably comprising a latch means which yields at a predetermined force which is less than the second force but greater than the first force.

16. A magnetic device as claimed in claim 1 or 2, wherein the rotation limiting means (33) is arranged to permit relative rotation of the first and second permanent magnets (10;11) from a deactivated state, in which the magnetic device presents a relatively weak external magnetic field, past the "fully on" position into an activated state in which the north and south poles of the first permanent magnet (10) and the south and north poles, respectively, of the second permanent magnet (11) are rotationally misaligned by an angle and the magnetic device presents a relatively strong external magnetic field, such that the magnetic device will remain in the activated state when it is removed from contact with or close proximity to the external ferromagnetic material, the rotation limiting means (33) comprising a stop member arranged to selectively engage with the movable one of the first and second permanent magnets (10;11) in the activated state.

17. A magnetic device as claimed in claim 1 or 2, wherein the actuation means (22) includes a flexible portion arranged to deform when the actuation means (22) is actuated and the magnetic device is not in contact with nor in close proximity to the external ferromagnetic material to thereby limit relative rotation of the rotatable one of the first and second permanent magnets (10;11), said flexible portion having sufficient yield strength to avoid deformation during actuation of said actuation means (22) when the magnetic device is in contact with or is in close proximity to the external ferromagnetic material, said flexible portion preferably being a spring link (50).

18. A magnetic device as claimed in claim 17, wherein said flexible portion is arranged such that it is deformable to a maximum extent, and wherein the actuation means is arranged to cause relative rotation of the rotatable one of the first and second permanent magnets (10;11) after the flexible portion has been deformed to the maximum extent.

19. A magnetic device according to any one of claims 2, 3, 6, or 16, wherein the magnetic device is assembled from individual modules comprising a basic module (2000) incorporating the first and second permanent magnets (10;11) disposed within a chamber in the housing, an actuator (2070) arranged to enable selective relative rotation of the rotatable one of the first and second permanent magnets (10;11) to switch the magnetic device between the 'fully on' and 'fully off' position, and one or more modules (2020;2030) arranged to perform the biasing and rotation limiting functionality referred to in claim 1, 3, 6 or 16.

20. A device according to claim 19, further including an operation selection module (2040) arranged to selectively activate and deactivate one or more of the automatic turn-on and automatic turn off modules (2020;2030).

## Patentansprüche

1. Schaltbare Magnetvorrichtung der Art, die ein Gehäuse (12, 13), einen ersten Permanentmagneten (10), einen zweiten Permanentmagneten (11), wobei der erste und zweite Permanentmagnet in dem Gehäuse (12, 13) angebracht sind, sodass der erste und zweite Permanentmagnet (10; 11) relativ zueinander drehbar sind, und Betätigungsmittel (22), die angepasst sind, um eine relative Drehung des ersten und zweiten Permanentmagneten (10; 11) zu bewirken, beinhaltet, wobei der erste und zweite Magnet relativ zueinander zwischen einer "Fully off'-Position, in der Nord- und Südpol des ersten Permanentmagneten (10) jeweils auf den Süd- und Nordpol des zweiten Permanentmagneten (11) ausgerichtet sind und die magnetische Vorrichtung ein minimales externes Magnetfeld aufweist, und einer "Fully on"-Position, in der der Nord- und Südpol des ersten Permanentmagneten (10) jeweils auf den Nord- und Südpol des zweiten Permanentmagneten (11) ausgerichtet positioniert sind und die Magnetvorrichtung ein maximales externes Magnetfeld aufweist, drehbar sind,
**dadurch gekennzeichnet, dass** die Magnetvorrichtung in Kontakt mit oder in enge Nähe zu einem externen ferromagnetischen Material (1050, 1230, 1305, 1420, 1730) bringbar ist, das lösbar an die Magnetvorrichtung anbringbar ist,
wobei die Magnetvorrichtung weiter eines oder beides von
(a) automatischen Anschaltemitteln (21, 30), die angeordnet sind, um die Magnetvorrichtung automatisch in eine "An"-Position zu schalten, in der die Magnetvorrichtung ein relativ starkes externes Magnetfeld aufweist, wenn die Magnetvorrichtung in Kontakt mit oder in enge Nähe zu dem externen ferromagnetischen Material gebracht wird, und
(b) automatischen Abschaltemitteln (33), die angeordnet sind, um die Magnetvorrichtung automatisch in eine "Aus"-Position zu schalten, in der die Magnetvorrichtung ein relativ schwaches externes Magnetfeld aufweist, wenn der Kontakt der Magnetvorrichtung mit oder die enge Nähe zu dem externen ferromagnetischen Material gelöst wird, beinhaltet,
**dass** die automatischen Anschaltemittel (21, 30) Vorspannungsmittel (30) beinhalten, die operativ mit dem ersten und zweiten Permanentmagneten (10; 11) verbunden sind, um die relative Rotationsposition des ersten und zweiten Permanentmagneten (10; 11) weg von der "Fully off'-Position vorzuspannen und die relative Drehung des ersten und zweiten Permanentmagneten in Richtung der "Fully on"-Position zu bewirken, wenn die Vorrichtung an dem oder in enger Nähe zu dem externen ferromagnetischen Material platziert ist,
**und dass** die automatischen Abschaltemittel Rotationsbeschränkungsmittel (33) beinhalten, die operativ mit einem drehbaren von dem ersten und zweiten Permanentmagneten (10; 11) verbunden sind, um den drehbaren Permanentmagneten (10) lösbar in einer Rotationsposition zu halten, in der die Magnetvorrichtung ein starkes externes Magnetfeld aufweist und die nahe an, aber rotationsversetzt zu der "Fully on"-Position ist.

2. Magnetvorrichtung nach Anspruch 1, wobei der erste und zweite Permanentmagnet (10; 11) zylindrisch oder scheibenförmig sind, diametral polarisiert und in dem Gehäuse (12, 13) übereinander gestapelt sind, um relativ zueinander um eine gemeinsame Achse, die durch einen Mittelpunkt des ersten und zweiten Permanentmagneten (10; 11) verläuft, drehbar zu sein.

3. Magnetvorrichtung nach Anspruch 1 oder 2, wobei das Vorspannungsmittel (30) angeordnet ist, um eine Rotationskraft (F) auszuüben, um eine relative Drehung des ersten und zweiten Permanentmagneten (10; 11) in Richtung der "Fully on"-Position zu bewirken, die einen Wert aufweist, der geringer als eine erste Rotationsspitzenkraft (F2) ist, die erforderlich ist, um eine relative Drehung des ersten und zweiten Permanentmagneten (10; 11) in Richtung der "Fully on"-Position zu bewirken, wenn die Magnetvorrichtung nicht in Kontakt mit oder enger Nähe zu dem ferromagnetischen Material ist, sondern die einen Wert aufweist, der höher als eine zweite Rotationsspitzenkraft (F1) ist, die erforderlich ist, um eine relative Drehung des ersten und zweiten Permanentmagneten (10; 11) in Richtung der "Fully on"-Position zu bewirken, wenn die Magnetvorrichtung in Kontakt mit oder in enger Nähe zu dem externen ferromagnetischen Material ist.

4. Magnetvorrichtung nach Anspruch 3, wobei die Vorspannungskraft (F) von einem solchen Wert ist, dass jeweils der Nord- und Südpol des drehbaren von dem ersten und zweiten Permanentmagneten (10; 11) um einen Winkel von 10 bis 60 Grad, bevorzugt 30 Grad, rotationsversetzt zu der "Fully off"-Position ist, wenn die Magnetvorrichtung nicht in Kontakt mit oder nicht in enger Nähe zu dem externen ferromagnetischen Material ist.

5. Magnetvorrichtung nach Anspruch 3 oder 4, wobei das Vorspannungsmittel (30) eine Feder ist.

6. Magnetvorrichtung nach einem der Ansprüche 1 bis 5, wobei das Rotationsbeschränkungsmittel (33) angeordnet ist, um eine relative Drehung des ersten und zweiten Permanentmagneten (10; 11) von einem aktivierten Zustand, in dem die Magnetvorrichtung ein relativ starkes externes Magnetfeld aufweist, in einen deaktivierten Zustand, in dem die Magnetvorrichtung ein relativ schwaches externes Magnetfeld aufweist, wenn der Kontakt der Magnetvorrichtung mit oder die enge Nähe zu dem externen ferromagnetischen Material gelöst wird, zu erlauben.

7. Magnetvorrichtung nach Anspruch 6, wobei in dem deaktivierten Zustand jeweils der Nord- und Südpol des ersten Permanentmagneten (10) und der Süd- und Nordpol des zweiten Permanentmagneten (11) um 50 Grad oder weniger, bevorzugt 30 Grad oder weniger, rotationsversetzt ist.

8. Magnetvorrichtung nach Anspruch 6, wobei in dem deaktivierten Zustand jeweils der Nord- und Südpol des ersten Permanentmagneten (10) und der Süd- und Nordpol des zweiten Permanentmagneten (11) rotationsausgerichtet ist und sich die Magnetvorrichtung in der "Fully off"-Position befindet.

9. Magnetvorrichtung nach Anspruch 6, wobei in dem aktivierten Zustand jeweils der Nord- und Südpol des ersten Permanentmagneten (10) und der Nord- und Südpol des zweiten Permanentmagneten (11) um weniger als 15 Grad, bevorzugt um ungefähr 10 Grad, rotationsversetzt ist.

10. Magnetvorrichtung nach einem der Ansprüche 6 bis 9, wobei das Rotationsbeschränkungsmittel (33) angeordnet ist, um die relative Drehung des ersten und zweiten Permanentmagneten (10; 11) auf weniger als oder gleich 180 Grad zu beschränken.

11. Magnetvorrichtung nach Anspruch 6, wobei das Rotationsbeschränkungsmittel (33) angeordnet ist, um zu verhindern, dass der erste und zweite Permanentmagnet (10; 11) die "Fully on"-Position einnehmen.

12. Magnetvorrichtung nach Anspruch 11, wobei die Rotationsbeschränkungsmittel (33) ein Anschlagsmittel umfassen, das angeordnet ist, um entweder (i) die Drehung des Betätigungsmittels (22) zu verhindern, um den bewegbaren von dem ersten und zweiten Permanentmagneten (10; 11) in die "Fully on"-Position zu schalten, oder (ii) um den bewegbaren von dem ersten und zweiten Permanentmagneten (10; 11) selektiv in Eingriff zu nehmen, um seine Drehung in die "Fully on"-Position zu verhindern.

13. Vorrichtung nach Anspruch 6, wobei das Rotationsbeschränkungsmittel angeordnet ist, um eine Rückhaltekraft auszuüben, um den bewegbaren von dem ersten und zweiten Permanentmagneten (10; 11) in der aktivierten Position zu halten, wenn die Magnetvorrichtung in Kontakt mit oder in enger Nähe zu dem externen ferromagnetischen Material ist, wobei die Rückhaltekraft, die ausgeübt wird, um die Permanentmagneten (10; 11) in der aktivierten Position zu halten, größer als eine erste Kraft ist, die erforderlich ist, um die Permanentmagneten (10; 11) in dem aktivierten Zustand zu halten, wenn die Magnetvorrichtung in Kontakt mit oder enger Nähe zu dem externen ferromagnetischen Material ist, aber kleiner als eine zweite Kraft ist, die erforderlich ist, um die Permanentmagneten (10; 11) in dem aktivierten Zustand zu halten, wenn die Magnetvorrichtung nicht in Kontakt mit oder in enger Nähe zu dem externen ferromagnetischen Material ist, wodurch dem oder den bewegbaren von dem ersten und zweiten Permanentmagneten (10; 11) erlaubt wird, sich automatisch in Richtung des deaktivierten Zustands zu drehen, wenn die Magnetvorrichtung aus einer Position in Kontakt mit oder in enger Nähe zu dem externen ferromagnetischen Material entfernt wird.

14. Magnetvorrichtung nach Anspruch 13, wobei die Rückhaltekraft eine Reibungskraft ist, die durch den bewegbaren von den Permanentmagneten (10; 11) in dem Gehäuse (12, 13) der Magnetvorrichtung erzeugt wird.

15. Vorrichtung nach Anspruch 13, wobei das Rotationsbeschränkungsmittel eine Rückhaltevorrichtung umfasst, die konfiguriert ist, um die Rückhaltekraft auszuüben, um den oder die bewegbaren von dem ersten und zweiten Permanentmagneten (10; 11) in der aktivierten Position zu halten, wenn die Magnetvorrichtung in Kontakt mit oder in enger Nähe zu dem externen ferromagnetischen Material ist, wobei die Rückhaltevorrichtung vorzugsweise ein Verriegelungsmittel umfasst, das bei einer zuvor festgelegten Kraft, die geringer als die zweite Kraft, aber größer als die erste Kraft ist, nachgibt.

16. Magnetvorrichtung nach Anspruch 1 oder 2, wobei das Rotationsbeschränkungsmittel (33) angeordnet ist, um eine relative Drehung der ersten und zweiten Permanentmagneten (10; 11) von einem deaktivierten Zustand, in dem die Magnetvorrichtung ein relativ schwaches externes Magnetfeld aufweist, vorbei an der "Fully on"-Position in einen aktivierten Zustand zu erlauben, in dem jeweils der Nord- und Südpol des ersten Permanentmagneten (10) und der Süd- und Nordpol des zweiten Permanentmagneten (11) um einen Winkel rotationsversetzt sind und die Magnetvorrichtung ein relativ starkes externes Magnetfeld aufweist, sodass die Magnetvorrichtung in dem aktivierten Zustand bleibt, wenn sie von Kontakt mit oder enger Nähe zu dem externen ferromagnetischen Material gelöst wird, wobei das Rotationsbeschränkungsmittel (33) ein Anschlagselement umfasst, das angeordnet ist, um den bewegbaren von dem ersten und zweiten Permanentmagneten (10; 11) im aktivierten Zustand selektiv in Eingriff zu nehmen.

17. Magnetvorrichtung nach Anspruch 1 oder 2, wobei das Betätigungsmittel (22) einen flexiblen Teil beinhaltet, der angeordnet ist, um sich zu verformen, wenn das Betätigungsmittel (22) betätigt wird und die Magnetvorrichtung nicht in Kontakt mit oder in enger Nähe zu dem externen ferromagnetischen Material ist, um dadurch die relative Drehung des drehbaren von dem ersten und zweiten Permanentmagneten (10; 11) zu beschränken, wobei der flexible Teil eine ausreichend Streckgrenze aufweist, um eine Verformung während der Betätigung des Betätigungsmittels (22) zu verhindern, wenn die Magnetvorrichtung in Kontakt mit oder in enger Nähe zu dem externen ferromagnetischen Material ist, wobei der flexible Teil bevorzugt ein Federglied (50) ist.

18. Magnetvorrichtung nach Anspruch 17, wobei der flexible Teil so angeordnet ist, dass er in einem maximalen Ausmaß verformbar ist, und wobei das Betätigungsmittel angeordnet ist, um eine relative Drehung des drehbaren von dem ersten und zweiten Permanentmagneten (10; 11) zu bewirken, nachdem der flexible Teil im maximalen Ausmaß verformt worden ist.

19. Magnetvorrichtung nach einem der Ansprüche 2, 3, 6 oder 16, wobei die Magnetvorrichtung aus individuellen Modulen zusammengebaut ist, umfassend ein Basismodul (2000), das den ersten und zweiten Permanentmagneten (10; 11) angeordnet in einer Kammer in dem Gehäuse beinhaltet, eine Betätigung (2070), die angeordnet ist, um eine selektive relative Drehung des drehbaren von dem ersten und zweiten Permanentmagneten (10; 11) zu ermöglichen, um die Magnetvorrichtung zwischen der "Fully on"- und "Fully off"-Position zu schalten, und ein oder mehrere Module (2020; 2030), die angeordnet sind, um die Vorspannungs- und Rotationsbeschränkungsfunktionalität durchzuführen, auf die in Anspruch 1, 3, 6 oder 16 Bezug genommen wird.

20. Vorrichtung nach Anspruch 19, weiter beinhaltend ein Betriebsauswahlmodul (2040), das angeordnet ist, um ein oder mehrere von dem automatischen Anschalte- und automatischen Abschaltemodul (2020; 2030) selektiv zu aktivieren und zu deaktivieren.

## Revendications

1. Dispositif magnétique pouvant commuter du type comprenant un boîtier (12, 13), un premier aimant permanent (10), un second aimant permanent (11), les premier et second aimants permanents étant montés à l'intérieur du boîtier (12, 13) de sorte que les premier et second aimants permanents (10 ; 11) puissent tourner l'un par rapport à l'autre, et un moyen d'actionnement (22) apte à provoquer une rotation relative desdits premier et second aimants permanents (10 ; 11), dans lequel les premier et second aimants sont rotatifs l'un par rapport à l'autre entre une position « complètement hors circuit » dans laquelle des pôles nord et sud du premier aimant permanent (10) sont respectivement alignés avec des pôles sud et nord du second aimant permanent (11) et le dispositif magnétique affiche un champ magnétique externe minimal, et une position « complètement en circuit » dans laquelle les pôles nord et sud du premier aimant permanent (10) sont positionnés en alignement respectif avec les pôles nord et sud du second aimant permanent (11) et le dispositif magnétique affiche un champ magnétique externe maximal,
**caractérisé en ce que** le dispositif magnétique peut être placé en contact avec un matériau ferromagnétique externe (1050, 1230, 1305, 1420,1730) pouvant être fixé de manière libérable au dispositif magnétique, ou à proximité immédiate de ce dernier, le dispositif magnétique comprenant en outre
(a) un moyen de mise en circuit automatique (21, 30) conçu pour commuter automatiquement le dispositif magnétique vers une position « en circuit », dans laquelle le dispositif magnétique affiche un champ magnétique externe relativement puissant, lorsque le dispositif magnétique est amené en contact avec le matériau ferromagnétique externe, ou à proximité immédiate de ce dernier, et/ou
(b) un moyen de mise hors circuit automatique (33) conçu pour commuter automatiquement le dispositif magnétique vers une position « hors circuit », dans laquelle le dispositif magnétique affiche un champ magnétique externe relativement faible, lorsque le dispositif magnétique est dégagé du contact avec le matériau ferromagnétique externe, ou de sa proximité immédiate avec ce dernier,
**en ce que** le moyen de mise en circuit automatique (21, 30) comprend un moyen de sollicitation (30) associé de manière fonctionnelle aux premier et second aimants permanents (10 ; 11) pour solliciter la position de rotation relative des premier et second aimants permanents (10 ; 11) à l'écart de la position « complètement hors circuit » et provoquer la rotation relative des premier et second aimants permanents en direction de la position « complètement en circuit » lorsque le dispositif est placé sur le matériau ferromagnétique externe, ou à proximité immédiate de ce dernier,
**et en ce que** le moyen de mise hors circuit automatique comprend un moyen de limitation de rotation (33) associé de manière fonctionnelle avec l'un, rotatif, des premier et second aimants permanents (10 ; 11) pour maintenir de façon libérable l'aimant permettant rotatif (10) dans une position de rotation dans laquelle le dispositif magnétique affiche un champ magnétique externe puissant et qui est proche de la position « complètement en circuit », mais décalée en rotation de cette dernière.

2. Dispositif magnétique selon la revendication 1, dans lequel les premier et second aimants permanents (10 ; 11) ont une forme cylindrique ou de disque, sont polarisés diamétralement et sont empilés l'un sur l'autre à l'intérieur du boîtier (12, 13) de façon à pouvoir tourner l'un par rapport à l'autre autour d'un axe commun passant par un point central des premier et second aimants permanents (10 ; 11).

3. Dispositif magnétique selon la revendication 1 ou 2, dans lequel le moyen de sollicitation (30) est conçu pour appliquer une force de rotation (F) servant à provoquer une rotation relative des premier et second aimants permanents (10 ; 11) en direction de la position « complètement en circuit » ayant une valeur qui est inférieure à une première force maximale de rotation (F2) nécessaire à provoquer une rotation relative des premier et second aimants permanents (10 ; 11) en direction de la position « complètement en circuit » lorsque le dispositif magnétique n'est pas en contact avec le matériau ferromagnétique, ni à proximité immédiate de ce dernier, mais ayant une valeur supérieure à une seconde force maximale de rotation (F1) nécessaire à provoquer une rotation relative des premier et second aimants permanents (10 ; 11) en direction de la position « complètement en circuit » lorsque le dispositif magnétique est en contact avec le matériau ferromagnétique externe ou à proximité immédiate de ce dernier.

4. Dispositif magnétique selon la revendication 3, dans lequel la force de sollicitation (F) a une valeur telle que les pôles nord et sud de l'aimant permanent rotatif des premier et second aimants permanents (10; 11) sont respectivement décalés en rotation de la position « complètement hors circuit » d'un angle de 10 à 60 degrés, on préfère de 30 degrés, lorsque le dispositif magnétique n'est pas en contact avec le matériau ferromagnétique externe, ni à proximité immédiate de ce dernier.

5. Dispositif magnétique selon la revendication 3 ou 4, dans lequel le moyen de sollicitation (30) est un ressort.

6. Dispositif magnétique selon l'une quelconque des revendications 1 à 5, dans lequel le moyen de limitation de rotation (33) est conçu pour permettre une rotation relative des premier et second aimants permanents (10 ; 11) d'un état activé, dans lequel le dispositif magnétique affiche un champ magnétique externe relativement puissant, à un état désactivé, dans lequel le dispositif magnétique affiche un champ magnétique externe relativement faible, lorsque le dispositif magnétique n'est plus en contact avec le matériau ferromagnétique externe, ou à proximité immédiate de ce dernier.

7. Dispositif magnétique selon la revendication 6, dans lequel, dans l'état désactivé, les pôles nord et sud du premier aimant permanent (10) et les pôles sud et nord du second aimant permanent (11) sont respectivement décalés en rotation d'un angle inférieur ou égal à 50 degrés, on préfère inférieur ou égal à 30 degrés.

8. Dispositif magnétique selon la revendication 6, dans lequel, dans l'état désactivé, les pôles nord et sud du premier aimant permanent (10) et les pôles sud et nord du second aimant permanent (11) sont respectivement alignés en rotation et le dispositif magnétique est dans la position « complètement hors circuit ».

9. Dispositif magnétique selon la revendication 6, dans lequel, dans l'état activé, les pôles nord et sud du premier aimant permanent (10) et les pôles nord et sud du second aimant permanent (11) sont respectivement décalés en rotation d'un angle inférieur ou égal à 15 degrés, on préfère d'environ 10 degrés.

10. Dispositif magnétique selon l'une quelconque des revendications 6 à 9, dans lequel le moyen de limitation de rotation (33) est conçu pour limiter la rotation relative des premier et second aimants permanents (10 ; 11) sur un angle inférieur ou égal à 180 degrés.

11. Dispositif magnétique selon la revendication 6, dans lequel le moyen de limitation de rotation (33) est conçu pour empêcher que les premier et second aimants permanents (10 ; 11) ne viennent dans la position « complètement en circuit ».

12. Dispositif magnétique selon la revendication 11, dans lequel le moyen de limitation de rotation (33) comprend un moyen de butée conçu pour soit (i) empêcher une rotation du moyen d'actionnement (22) pour commuter l'aimant permanent mobile des premier et second aimants permanents (10 ; 11) dans la position « complètement en circuit » soit (ii) contacter sélectivement l'aimant permanent mobile des premier et second aimants permanents (10 ; 11) pour empêcher une rotation de ce dernier dans la position « complètement en circuit ».

13. Dispositif selon la revendication 6, dans lequel le moyen de limitation de rotation est conçu pour appliquer une force de retenue visant à retenir l'aimant mobile des premier et second aimants permanents (10 ; 11) dans la position activée lorsque le dispositif magnétique est en contact avec le matériau ferromagnétique externe, ou à proximité immédiate de ce dernier, la force de retenue appliquée pour maintenir les aimants permanents (10 ; 11) dans la position activée étant supérieure à une première force nécessaire pour maintenir les aimants permanents (10 ; 11) dans l'état activé lorsque le dispositif magnétique est en contact avec le matériau ferromagnétique externe, ou à proximité immédiate de ce dernier, mais inférieure à une seconde force nécessaire pour maintenir les aimants permanents (10 ; 11) dans l'état activé lorsque le dispositif magnétique n'est pas en contact avec le matériau ferromagnétique externe, ni à proximité immédiate de ce dernier, permettant ainsi au ou aux aimants mobiles des premier et second aimants permanents (10 ; 11) de tourner automatiquement en direction de l'état désactivé lorsque le dispositif magnétique n'est plus dans une position de contact avec le matériau ferromagnétique externe ou de proximité immédiate avec ce dernier.

14. Dispositif magnétique selon la revendication 13, dans lequel la force de retenue est une force de frottement générée par l'aimant permanent mobile des aimants permanents (10 ; 11) à l'intérieur du boîtier (12, 13) du dispositif magnétique.

15. Dispositif selon la revendication 13, dans lequel le moyen de limitation de rotation comprend un dispositif de retenue conçu pour appliquer la force de retenue visant à retenir le ou les aimants permanents mobiles des premier et second aimants permanents (10 ; 11) dans la position activée lorsque le dispositif magnétique est en contact avec le matériau ferromagnétique externe, ou à proximité immédiate de ce dernier, le dispositif de retenue comprenant de préférence un moyen de verrouillage qui se déforme élastiquement lors de l'application d'une force prédéterminée qui est inférieure à la seconde force mais qui est supérieure à la première force.

16. Dispositif magnétique selon la revendication 1 ou 2, dans lequel le moyen de limitation de rotation (33) est conçu pour permettre une rotation relative des premier et second aimants permanents (10 ; 11) d'un état désactivé, dans lequel le dispositif magnétique affiche un champ magnétique externe relativement faible, au-delà de la position « complètement en circuit » dans un état activé dans lequel les pôles nord et sud du premier aimant permanent (10) et les pôles sud et nord du second aimant permanent (11) sont respectivement décalés en rotation d'un certain angle et dans lequel le dispositif magnétique affiche un champ magnétique externe relativement puissant, de sorte que le dispositif magnétique demeure dans l'état activé lorsqu'il n'est plus en contact avec le matériau ferromagnétique externe, ou à proximité immédiate de ce dernier, le moyen de limitation de rotation (33) comprenant un élément de butée conçu pour contacter sélectivement l'aimant permanent mobile des premier et second aimants permanents (10 ; 11) dans l'état activé.

17. Dispositif magnétique selon la revendication 1 ou 2, dans lequel le moyen d'actionnement (22) comprend une partie flexible conçue pour se déformer lorsque le moyen d'actionnement (22) est actionné et que le dispositif magnétique n'est pas en contact avec le matériau ferromagnétique externe, ni à proximité immédiate de ce dernier, pour ainsi limiter la rotation relative de l'aimant permanent rotatif des premier et second aimants permanents (10 ; 11), ladite partie flexible ayant une résistance à la déformation élastique suffisante pour éviter une déformation pendant l'actionnement dudit moyen d'actionnement (22) lorsque le dispositif magnétique est en contact avec le matériau ferromagnétique externe, ou à proximité immédiate de ce dernier, ladite partie flexible étant de préférence une liaison à ressort (50).

18. Dispositif magnétique selon la revendication 17, dans lequel ladite partie flexible est conçue de sorte qu'elle peut se déformer dans une mesure maximale, et dans lequel le moyen d'actionnement est conçu pour provoquer une rotation relative de l'aimant permanent rotatif des premier et second aimants permanents (10 ; 11) après la déformation de la partie flexible dans la mesure maximale.

19. Dispositif magnétique selon l'une quelconque des revendications 2, 3, 6, ou 16, dans lequel le dispositif magnétique est assemblé à partir de modules individuels comprenant un module de base (2000) incorporant les premier et second aimants permanents (10 ; 11) disposés à l'intérieur d'une chambre du boîtier, un actionneur (2070) conçu pour permettre une rotation relative sélective de l'aimant permanent rotatif des premier et second aimants permanents (10 ; 11) pour commuter le dispositif magnétique entre une position « complètement en circuit » et une position « complètement hors circuit », et un ou plusieurs modules (2020 ; 2030) conçus pour mettre en oeuvre la fonctionnalité de sollicitation et de limitation de rotation selon les revendications 1, 3, 6 ou 16.

20. Dispositif selon la revendication 19, comprenant en outre un module de sélection d'opération (2040) conçu pour activer et désactiver sélectivement un ou plusieurs des modules de mise en circuit automatique et de mise hors circuit automatique (2020 ; 2030).
